# EUROPEAN PATENT APPLICATION

(11) **EP 4 817 577 A1**
(43) Date of publication of application: **07.10.2026**
(21) Application number: 25202903.8
(22) Date of filing: 17.09.2025
(51) Int. Cl.: A61G 3/06, B60P 1/43

(54) **FOLDABLE RAMP FOR WHEELCHAIR ACCESS TO A PASSENGER CAR REAR DOOR WITH LOAD MEASUREMENT ARRANGEMENT**

(30) Priority: 04.04.2025 EP 25168650
(71) Applicant: API CZ s.r.o., 391 76 Slapy (CZ)
(72) Inventor: Bartos, Miroslav, 39001 Tabor (CZ); Huisl, Marek, 39165 Bechyne (CZ)
(74) Representative: Schmid, Nils T.F.

(57) **Abstract**

The present invention relates to a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, characterized by a load measurement arrangement comprising a deformation element which is elastically deformed when the platform is loaded and a sensor for indirectly measuring the load by detecting, in particular measuring, the deformation of the deformation element.

## Description

The present disclosure relates to a foldable ramp system and method for wheelchair access to a passenger car rear door. Specifically, the present disclosure pertains to a ramp with a load measurement arrangement for indirectly measuring the load applied to the ramp, enhancing safety and usability for wheelchair users.

In the field of accessibility solutions for vehicles, it is common to utilize ramps to facilitate wheelchair access. These ramps are typically designed to be foldable, allowing them to be stowed away when not in use. Known systems often involve manual or semi-automatic mechanisms for deploying and retracting the ramp, which can be cumbersome and require significant physical effort. Additionally, these ramps are generally constructed to be robust and durable, capable of supporting the weight of a wheelchair and its occupant. However, the mechanisms for measuring and ensuring the safe load capacity of these ramps are often rudimentary, relying on fixed structural designs without dynamic feedback on the load being applied.

Existing approaches to foldable ramps for vehicles typically focus on mechanical stability and ease of use. Many systems employ simple hinge mechanisms that allow the ramp to be folded into the vehicle when not in use. These systems often lack sophisticated load measurement capabilities, which can lead to safety concerns if the ramp is overloaded. The absence of real-time load monitoring means that users must rely on the manufacturer's specifications and their own judgment to ensure safe operation. This can be particularly challenging in varying conditions, such as uneven surfaces or when the ramp is used by different types of wheelchairs with varying weights.

Despite the substantial advances in the field of vehicle accessibility, there remains a need for improved systems that can provide more reliable and accurate load measurement capabilities. Current systems are too complex, expensive and/or do not adequately address the need for dynamic load feedback, which is important for ensuring the safety and reliability of foldable ramps in real-world applications.

It is an object of this invention to provide a foldable ramp that overcomes one or more of the disadvantages of known systems, in particular that provides a simple, cheap and reliable load measurement arrangement, in particular for providing adequate and/or dynamic load feedback.

A first aspect of the invention provides a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and measuring arrangement, in particular a load measurement arrangement, comprising a deformation element which is elastically deformed in at least one status selected form a load of the platform and/or an uneven ground the passenger car is standing on, in particular which is elastically deformed when the platform is loaded, and a sensor for indirectly measuring the at least one status, in particular the load, by measuring the deformation of the deformation element.

It shall be clear that the term "load measurement arrangement" as used herein may refer to a measurement arrangement for detecting, in particular measuring, load of the platform but does not necessarily have to refer thereto. Rather, as used herein, the term "load measurement arrangement" may alternatively relate to a measurement arrangement for detecting, in particular measuring, a status selected from a load of the platform and/or an uneven ground of the passenger car is sanding on. Respectively, the aspects and/or embodiments within the present disclosure are not necessarily limited to load detection, in particular measurement, but can additionally or alternatively also relate to a measurement arrangement for detecting, in particular measuring, load of the platform and/or an uneven ground the passenger car is standing on. The same applies to the expression "when the platform is loaded" as used herein. It shall be clear that any disclosure provided herein with respect to this or similar wording shall equally apply to embodiments of an uneven ground the passenger car is standing on. In this context any disclosure being described in the context of the condition "when the platform is loaded" may equally apply to the provision of uneven ground the passenger car is standing on, wherein both provisions may be alternative or commonly covered by the wording "at least one status selected form a load of the platform and/or an uneven ground the passenger car is standing on. An aspect of the present invention and preferred embodiments relating to the detection of an uneven ground the passenger car is standing on is described later in this disclosure.

The deformation element is preferably hollow cylindrically shaped, preferably hollow cylindrically shaped and made of polyurethan, and preferably surrounds the pin of a rotational bearing, in particular of a rotational bearing being mounted in a side plate of a bridge and preferably forming part of a slide rail arrangement, in particular a slide rail arrangement as described in detail below.

Preferably, the deformation element is designed to be elastically deformed by at least 0,1 mm, more preferably at least 0,2 mm or 0,3 mm, when the platform is loaded with 70 kg. For example, the deformation element is designed to be deformed by at least 0,1 mm, preferably at least 0,2 mm, 0,3 mm, 0,4 mm, 0,5 mm, 0,6 mm or 0,7 mm, when a person in a wheel chair, in particular with a total weight of 70 kg, is in the middle, in particular in length and width direction, of the platform. A deformation of the deformation element being indicated in mm is in particular to be understood as the movement of a point of the deformation element, for example the axis of a pin, in particular a pin of a mounting as described in detail below, being surrounded by the deformation element. Preferably, the deformation of the deformation element causes a distance between two measuring points to increase when the platform is loaded, in particular loaded with at least 70 kg. Particularly preferred, the deformation element is part of a mounting for transferring weight forces from the platform to a bridge of the foldable ramp, wherein a part of the mounting, in particular a pin of the bearing, follows the deformation, in particular of at least 0,7 mm, when the platform is loaded with 70 kg, so that the pin moves at least 0,7 mm, in particular in that the distance of the pin to a second measuring point, in particular a probe not following the deformation of the deformation element, increases by the traveling distance of the pin. Preferably, the change in distance is measured by the sensor, which can be implemented for example as hall sensor or capacity sensor, for measuring the change in distance between the two measuring points.

Further the load measurement arrangement preferably comprises at least one processor and at least one memory storing instructions that, when executed by the at least one processor, causes to calculate a load of the platform based on the measured change in distance between the two measuring points. For this purpose, the memory storing instructions may comprise information, for example a table or a formula, allocating the change in distance to a load. For example, a table can be provided that allocates deformation to a load causing this deformation. For example the table may allocate a deformation of 0,5 mm to a load of about 500 Newton, a deformation of 1 mm to a load of about 1.000 Newton, a deformation of 2 mm to a load of about 1.500 Newton, a deformation of 2,5 mm to a load of about 2.000 Newton, a deformation of 3 mm to a load of about 2.500 Newton, a deformation of 3,5 mm to a load of about 3.000 Newton, a deformation of 4 mm to a load of about 3.500 Newton, a deformation of 4,5 mm to a load of about 4.250 Newton, a deformation of 5 mm to a load of about 5250 Newton, and/or a deformation of 5,5 mm to a load of about 6.500 Newton. The term "about" with respect to a load quantified in Newton is in particular to be understood as encompassing a deviation from the loads indicated of ± 300 Newton, preferably ± 200 Newton, more preferably ± 100 Newton.

In particular, the subject matter described is a foldable ramp designed to facilitate wheelchair access to the rear door of a passenger car. This ramp includes a platform that can be positioned in multiple configurations. In particular, when in the entry position, the platform is extended out of the car to enable wheelchair access. In particular, in the transport position, the platform is positioned upright within the car, and in the passive position, the platform lies flat inside the car.

In the entry position, the platform may be oriented at an angle between 5° and 30°, preferably between 10° and 20°, relative to the horizontal. Due to such an orientation of the platform during access of the wheelchair, the wheelchair may easily and smoothly access the interior of the passenger car. For example, the length of the ramp in a length direction is larger than 20 cm and preferably less than 5 m, preferably between 50 cm and 2 m. The platform may be arranged in a transport position, i.e. a position in which a wheelchair has accessed the interior of the passenger car via its rear door and in which the passenger car may be driven while the wheelchair and the platform are stored in the back of the passenger car. In the transport position, the entry platform may be oriented in an upright position, particularly in a vertical position. It is clear, that in the transport position, the platform shall preferably have a length which is less than a vertical dimension of the passenger car, in particular a vertical dimension of the back of the passenger car. In an advantageous embodiment of the invention, the platform may be provided with a profiled upper surface and/or an anti-slip coating in order to facilitate use of the foldable ramp even in bad weather conditions, such as rain and/or snow, and/or to prevent the wheelchair from sliding backwards and/or sideways when accessing the passenger car rear door. Also, the platform may be arranged in a passive position in which the entry platform is provided in the passenger car in a lying position. The term "platform" as used herein may be interchangeably used with the term "entry platform".

The term "platform" particularly refers to the surface on which the wheelchair will roll. The ability to arrange the platform in several positions ensures versatility and convenience, allowing the ramp to be stowed away when not in use and easily deployed when needed. The foldable ramp may comprise a bridge, in particular for rotatably connecting the platform to a passenger car. A "bridge" may be understood as the component that provides the connection between the platform and the car and that enables the platform to rotate into the desired position, in particular from the transport position into the entry position and vice versa.

The foldable ramp may further comprise at least one pivot mechanism. A pivot mechanism as used herein may be employed to transition the platform between the transport position and passive position. This mechanism may pivot around an axis that runs parallel to the width of the platform. The pivot mechanism may be equipped with guiding means that define the path of the pivot axis during the transition, ensuring that the platform undergoes a combined rotational and translational movement. The guiding means may comprise pin-groove arrangement as described in detail below and/or a slide rail arrangement as described in detail below.

The pivot mechanism preferably comprises guiding means for defining a trajectory of the pivot axis between the transport position and the passive position so that the platform, when moving between the transport position and the passive position, conducts a rotationally translational movement, wherein the guiding means comprises at least one slide-rail arrangement, in particular with defined clearance between the slide and the rail in width direction. The slide-rail arrangement, in particular it's defined clearance, may be realized by using a slide-rail arrangement with a rail having a cavity with t-shaped cross section, which may also be referred to as "T-slot profile" and a slide with t-shaped cross section, wherein the t-shaped cross section of the slide and of the cavity of the rail are correspond to each other, e.g. have substantially the same dimensions despite a defined clearance , e.g. for allowing smooth movement of the slide in the rail. For example, the defined clearance may be between 0 mm and 10 mm, preferably between 0,1 mm and 8 mm, more preferably between 0,2 mm and 5 mm, even more preferably between 0,5 mm and 3 mm, most preferably between 1 mm and 2 mm. The clearance may be realized in that the dimension of the slide corresponding to the dimension of the cavity in the rail, for example the "top" or "crossbar" of the "T" and/or the "leg" or the "longitudinal bar" of the "T", is smaller by a defined clearance, e.g. the previously defined ranges. The advantages of this design include a compact and efficient mechanism for moving the ramp between different positions, reducing space requirements and complexity. The use of a T-slot profile for the slide-rail arrangement further enhances the compactness and ease of manipulation of the ramp. This design also allows for better force distribution in the joints, making it easier to balance the ramp during use.

The slide of the slide-rail arrangement is preferably connected, in particular rotatably connected, to a bridge, in particular a bridge side wall. A "bridge" as used herein particularly serves to, e.g. is designed to, connect the platform to a passenger car, in particular to rotatably connect the platform to the passenger car, in particular in that the platform can rotate from the transport position into the entry position and vice-verse, in particular by means of a pure rotational movement. Preferably, the previously and subsequently described pivot mechanism is designed to define the translational rotational movement of the platform from the passive position into the transport position and vice versa, while the bridge is designed to define the rotational movement of from the transport position to the entry position and vice versa. Preferably, the pivot mechanism defines the translational rotational movement from the passive position into the transport position and vice versa as a relative movement between the bridge and the platform, particularly preferred as a movement of the platform while the bridge does not move.

For this purpose, the pivot mechanism may comprises a slide-rail arrangement, e.g. the previously and subsequently described slide-rail arrangement, the rail of which is fixedly connected to the platform while the slide can move longitudinally relative to the platform along the rail while being connected to the bridge, in particular to a side plate of the bridge, e.g. rotationally connected to the side plate of the bridge but not translationally movable with respect of the side plate of the bridge. This can be realized for instance by means of a pin protruding from the slide and being connected to the side plate of the bridge by means of a bearing, in particular a roller bearing.

In addition to the slide-rail arrangement, the pivot mechanism can comprise a pin-groove arrangement which will be described in detail below. The pin groove arrangement can be realized in that the groove is fixedly connected to the bridge, e.g. to a side plate of the bridge, preferably to the same side plate of the bridge carrying the pin of the slide of the slide rail arrangement. The Pin of the pin-groove arrangement can be connected, in particular fixedly connected, to the platform, in particular to a platform side wall, in particular to the same platform side wall carrying the rail of the slide-rail arrangement. Thereby, the pin of the pin groove arrangement may be not in rotational and/or translational direction relative to the platform but translationally and preferably rotationally movable relative to the bridge, in particular along the groove of the bridge side plate.

Preferably, the rail of the slide-rail arrangement is connected, in particular fixedly connected, to a platform sidewall of the platform protruding from a platform floor of the platform, wherein the platform sidewall is preferably an extrusion profile and/or comprises a slot, in particular a slot on the top of the side wall, via which the slide is connected to the platform sidewall.

A "load measurement arrangement" as used herein may be understood as a system designed to assess the weight or force exerted on the platform. A "deformation element" as used herein may be understood as a component that changes shape elastically when subjected to a load. A "sensor" as used herein may be understood as device that detects and measures the deformation of the deformation element to indirectly determine the load. The detection of the deformation happens preferably indirectly, in particular by measuring the change in distance between two points caused by a force acting on or a load on the platform.

The present invention provides enhanced accessibility for wheelchair users, efficient use of space within the car, and the ability to monitor the load on the ramp to ensure safety and stability during use. The load measurement arrangement provides a reliable method for assessing the weight on the platform, contributing to the overall safety and functionality of the ramp system. In particular, the use of a deformation element for indirectly measuring the load based on the deformation of the deformation element has proven to be a reliable method providing load measurement with enough accuracy for the technical field of foldable ramps for wheelchair access, while being easier and cheaper to implement as for example the use of strain gauges which need to be implemented with such high precision that the load measurement arrangement is either too expensive to manufacture or does not function accurately.

In a first implementation of the foldable ramp according to the first aspect, the deformation element is part of a mounting for transferring weight forces from the platform to a bridge of the foldable ramp in the at least one status, in particular when the platform is loaded. This integration of the deformation element into the mounting introduces a specific means of communication between components, where the deformation element serves a dual function: it acts as a structural component that facilitates the transfer of weight forces from the loaded platform to the bridge, and simultaneously as a sensor element that provides data on the load by measuring its own deformation. This dual functionality enhances the efficiency and accuracy of the load measurement arrangement by ensuring that the deformation element is directly involved in the load transfer process, thereby providing real-time and precise load data. Moreover, the integration of the deformation element into the mounting mechanism simplifies the overall design by reducing the need for additional components solely dedicated to load measurement, thus lowering manufacturing costs and increasing reliability. This feature also ensures that the load measurement arrangement is robust and less susceptible to errors or malfunctions, as the deformation element is inherently part of the structural framework of the ramp.

Preferably, the mounting is a mounting in a side plate of a bridge, in particular a rotational bearing in a side plate of a bridge. In particular, the mounting carries a pin being translationally movable with respect to the platform, in particular to a platform side wall. In a preferred embodiment the pin is translationally movable with respect to the platform side wall by a slide being fixedly connected with the pin, in particular wherein the slide is translationally movable in a rail of or on the platform side wall. While the pin is preferably translationally movable to the platform side wall, the pin is preferably not translationally movable with respect to the bridge, in particular the bridge side plate. However, the pin is preferably rotationally mounted to the bridge, in particular the bridge side plate allowing a rotational movement between bridge, in particular bridge side plate, and the pin. Particuarlly preferred the pin, in particular the slide being connected to the pin, is part of a pivot mechanism of the foldable ramp. Thereby, the invention makes use of a load carrying part, namely a part carrying weight of the platform, in particular when moving from the passive position into the transport position and vice versa, while the movement of the pivot mechanism does not affect load measurement between the transport position and the entry position (in a preferred embodiment in which the pivot mechanism does not move between the transport and the entry position). The implementation of the deformation element in a mounting is particularly advantageous as it allows to concentrate a high load on a small space of the bearing, thereby allowing precise load measurement with relatively cheap and unprecise components. Contrary thereto, if one would for example implement a strain gauge directly into the platform floor, the measurement arrangement would be very complex and demanding as the platform needs to carry the wheelchair and is therefore not allowed be subject to strong deformation. Therefore, the strain gauge would need to be highly sensitive and applied to a precisely processed surface as it would need to measure very small deformations of the platform caused by load.

In a further implementation of the foldable ramp according to the first aspect, the deformation element is located in a mounting hole, in particular in a mounting hole of the bridge, more in particular in a mounting hole of a side plate of a bridge, in particular as described in detail below. The arrangement of the deformation element within the mounting hole enhances the structural integration and stability of the load measurement system. By positioning the deformation element in the mounting hole, the mechanism ensures that the deformation element is securely anchored, thereby providing a reliable and consistent point of measurement for the sensor. This configuration also facilitates efficient communication between the deformation element and the sensor, as the deformation occurring within the mounting hole can be accurately detected and measured by the sensor. The placement of the deformation element in the mounting hole of the bridge, and more precisely in the mounting hole of a side plate of the bridge, contributes to the overall robustness and durability of the load measurement arrangement. This brings the advantage of improved precision in load measurement, as the deformation element's location within the mounting hole allows for a more controlled and predictable deformation response under load conditions. Additionally, this arrangement can potentially simplify the assembly and maintenance of the ramp, as the deformation element and sensor are integrated into a defined and accessible part of the structure. Preferably, the deformation element has a cylindrical shape, in particular a hollow cylindrical shape, with an outer a diameter of at least 20 mm, more preferably at least 25 mm, even more preferably at least 30 mm, most preferably of about 32 mm. Particularly preferred the mounting hole has substantially the same diameter as the deformation element, wherein substantially is in particular intended to allow a deviation of up to ± 0,1 mm, 0,2mm, 0,3 mm, 0,5 mm, 1 mm, 2mm, 3 mm or 5mm, in particular to make it easier to assembly and/or to allow a press fitting between mounting hole and deformation element. Preferably, the sensor is connected, in particular fixedly connected, to the structure carrying the mounting hole, preferably on the side plate of the bridge. Particularly preferred the sensor is located on the opposite side of the previously described slide being connected to the pin in the mounting. In particular, the pin extends through the side plate to the side of the sensor, preferably protrudes from the side of the side plate where the sensor is located. Preferably the part of the pin protruding from the side plate at the side of the sensor is head of the pin, in particular a head of the pin, which pin and head are preferably part of a screw. Particularly preferred, the pin is part of a fitted screw, which can alternatively be referred to as fitted bolt. Thereby, the pin / bolt provides up to three functions, namely serving as a measuring point of the sensor/probe, serving as support shoulder for fixing the pin in axial direction (with respect to the pin axis) and providing the pin for transferring forces from the platform into the deformation element.

In a further implementation of the foldable ramp according to the first aspect, the deformation element surrounds a pin, in particular wherein the pin is in contact with the deformation element and/or wherein a region between the deformation element and the pin is free of a bearing, in particular free of a roller bearing. By directly contacting the pin with the deformation element, in particular by avoiding the use of a bearing, in particular a roller bearing, between the pin and the deformation element, the pressure area between the pin and the deformation element can be reduced. Alternatively, the deformation element may surround a rotational bearing surrounding a pin, more in particular a roller bearing surrounding a pin. The roller bearing is preferably realized as needle bearing. The rotational bearing, and more specifically the roller bearing, facilitates smooth rotation and minimizes friction, thereby ensuring accurate and reliable measurement of the deformation. This arrangement enhances the precision of the load measurement by providing a stable and consistent interface between the deformation element and the sensor. The inclusion of a roller bearing surrounding the pin further refines this communication mechanism by reducing wear and tear, which could otherwise affect the accuracy of the load measurement over time. The deformation element surrounding a pin, particularly with the specified types of bearings, brings significant improvements in the durability and reliability of the load measurement system. It ensures that the deformation element remains properly aligned and functions optimally under varying load conditions, thereby maintaining the integrity of the load measurement process. This detailed arrangement not only supports the primary function of the foldable ramp but also enhances its operational efficiency and longevity, making it a more robust and dependable solution for wheelchair access to passenger car rear doors. The specific use of rotational and roller bearings surrounding the pin underscores the importance of precision engineering in achieving accurate load measurement, which is beneficial for the safe and effective use of the ramp. Regardless of whether or not the pin is in direct contact with the deformation element or whether a roller bearing is located in between the pin and the deformation element, the pin is preferably fixedly connected with a slide, in particular a slide rail arrangement of the pivot mechanism as described above and below. Preferably, starting from the pin in radial direction (with respect to rotation axis of the roller bearing) the pin is surrounded by the roller bearing, which roller bearing is surrounded by the deformation element or the pin is directly surrounded by the deformation element, i.e. without a roller bearing in between, which deformation element is surrounded by the mounting hole, in particular in a side plate of the bridge.

In a further implementation of the foldable ramp according to the first aspect, the pin is part of a pivot mechanism for pivoting the platform between the transport position and the passive position, in particular the pin is part of guiding means of the pivot mechanism, in particular of a slide-rail arrangement of the pivot mechanism. This brings a specific mechanism of communication between components by incorporating the pin as an integral part of the pivot mechanism, which facilitates the transition of the platform between the transport and passive positions. The inclusion of the pin within the guiding means of the pivot mechanism, especially within a slide-rail arrangement, enhances the structural integrity and operational fluidity of the ramp.

In a further implementation of the foldable ramp according to the first aspect, the deformation element is encased, in particular by bushings or side plates of the bridge, which can also be referred to as encasing plates or bushings, on both sides of the mounting hole, to reduce, in particular avoid, evasive deformation of the deformation element in the at least one status, in particular when the platform is loaded, more in particular to force the deformation element into a substantially pure elastic compression in the at least one status, in particular when the platform is loaded. This encasement particularly serves to reduce or avoid evasive deformation of the deformation element when the platform is loaded. More specifically, the encasement forces the deformation element into a substantially pure elastic compression when the platform is loaded, in particular into one dimensional deformation, for example in the gravitational direction or a deformation direction deviating by up to 30°, 20°, 10°, 5°, 3° or 1° from the gravitational direction. This ensures that the deformation element's response to the load is more controlled and predictable, thereby enhancing the accuracy and reliability of the load measurement. By preventing evasive deformation, the encasement maintains the integrity of the deformation element's elastic properties, ensuring that the sensor can accurately measure the load based on the deformation. This structural refinement not only improves the precision of the load measurement but also contributes to the overall durability and functionality of the ramp, as the deformation element is less likely to experience wear or damage due to uncontrolled deformation. The encasement thus optimizes the performance of the load measurement arrangement, ensuring that the platform's load-bearing capacity is accurately monitored and maintained, which is beneficial for the safe and efficient operation of the foldable ramp in various positions.

In one embodiment, preferably, both side plates (encasing plates) comprise a hole through which the pin extends on both sides of the mounting whole, in particular of the side plate of the bridge. Preferably, the side plates (encasing plates) are connected, in particular screwed, to the side plate of the bridge. In particular the side plate of the bridge and the two side plates (encasing plates) encasing the deformation element delimit a cylindrical cavity with a diameter being substantially equal to the outer diameter of the deformation element and an axial extension being substantially equal to the axial extension of the deformation element and/or of the side plate of the bridge. In this regard "substantially" may be understood as allowing a deviation of ± 0,1 mm, 0,2mm, 0,3 mm, 0,5 mm, 1 mm, 2mm, 3 mm or 5mm, in particular to make it easier to assembly and/or to allow a press fitting between mounting hole, side plates (encasing plates) and deformation element. Preferably, the sensor is connected to one of the side plates, preferably the side plate (encasing plates) on the side of the side plate of the bridge facing away from the platform side wall, in particular away from the slide-rail arrangement in the platform side wall.

In an alternative embodiment, the deformation element is encased by at least one bushing, preferably by two bushings on both sides of the mounting hole. Preferably, the at least one bushing, preferably the two bushings, comprise/s a plate section and coat section. The plate section may comprise a hole through which the pin extends on one side of the mounting whole, in particular of the bridge side plate. The coat section may protrude from the plate section. Preferably, the coat section surrounds the deformation element in circumferential direction. In particular, the coast section may have a hollow cylindrical shape. The bushing, in particular the two bushings, may further comprise a shoulder, in particular protruding in radial direction of an axis of the pin beyond the coat section. The shoulder may serve as an abutment shoulder for engaging with the bridge side plate. On the side facing away from the deformation element, the shoulder an the plate section may form a planar, flat surface. Preferably, both of the two bushings may be designed as previously described. Thereby, the coat sections of both bushings may overlap each other in mounted position, in particular engage with each other. For this purpose a radial extension, relative to an axis of the pin, in particular a radius, of the coat section of one bushing may be larger than the diameter of the other bushing. In particular, the coat sections may be designed to form a snap fitting with each other. For this purpose, protrusions may be provided on both ends of the coat sections facing away from their respective plate section. In this embodiment, it is preferred that, in radial direction, the deformation element is surrounded by the coat section of a first one of the two bushings, which coat section is surrounded by a coat section of a second one of the two bushings, which coat section is surrounded by the mounting hole, in particular in a bridge side plate. Preferably, the bushings provide a form and/or force fitting between the deformation element and the mounting hole, in particular side plate. In such embodiment, the use of screws for connecting the bushings may be not necessary. In particular the plate of the bridge and the two plate sections of the bushing encasing the deformation element delimit a cylindrical cavity with a diameter being substantially equal to the outer diameter of the deformation element and an axial extension being substantially equal to the axial extension of the deformation element and/or of the side plate of the bridge. Preferably the at least one, preferably the two, bushing/s comprise/s aluminium or an aluminium alloy, in particular is/are made thereof.

In a further implementation of the foldable ramp according to the first aspect, in the at least one status, in particular when the platform is loaded, and preferably in entry position, the pin transfers weight forces from the platform to the deformable element, thereby elastically compressing the deformation element and moving over a compression distance, e.g. in gravitational direction. When the platform is subjected to a load, the pin preferably functions as a conduit for transferring weight forces from the platform to the deformable element. This transfer of forces particularly results in the elastic compression of the deformation element. The pin's movement over a compression distance, preferably in the direction of gravity, is indicative of the load applied to the platform. This movement is used by the sensor to accurately measure the deformation and thereby indirectly determine the load. The introduction of the pin as a mechanism for transferring weight forces enhances the precision and reliability of the load measurement arrangement by ensuring that the deformation element is compressed in a controlled manner. The communication between the pin and the deformable element establishes a direct physical interaction that facilitates the measurement process.

The expression "when the platform is loaded" may refer to a state where a loading force, particularly a gravitational loading force, for example of a wheelchair and/or a person, acts on the ramp. Preferably, the weight force is transferred from the platform into the pin and from the pin into the deformation element. Between the platform and the pin, the weight force is preferably transferred from a platform floor into a platform sidewall and from the platform sidewall into the pin. Between the platform sidewall and the pin, the force is preferably transferred from the platform sidewall into a guiding means of the pivot mechanism and from the guiding means into the pin. Preferably, the guiding means is a slide-rail arrangement, in particular in that the weight forces are transferred from a rail in or on the platform side wall into the slide being guided in the rail and from the slide into the pin. In the deformation element, the weight force particularly causes compression of the deformation element. The pin, in particular driven by the weight force, particularly moves into the space generated due compression of the deformation element over the compression distance. As such, the compression distance may be described as the distance the pin moves, in particular driven by the weight force, as a result of the deformation of the deformation element caused by the weight force. In this regard, when it is described above or subsequently, that the deformation element is deformed by a certain amount, this quantitative deformation is to be understood as referring to the compression distance. The pin may move along compression distance at least partially, preferably substantially, in gravitational direction. However, the pin may also move along an angle being inclined vis-a-vis a gravitation direction by an angle, e.g. an angle being substantially the same as the angle of the platform vis-à-vis a horizontal or a ground, when the platform is in entry position. In this regard, "substantially" may be understood to allow a deviation of ± 10°, 5°, 3°, 2°, 1° or 0°.

In a further implementation of the foldable ramp according to the first aspect, the sensor, in the at least one status, in particular when the platform is loaded, measures the deformation of the deformation element indirectly by measuring a change in distance between the pin and a probe. When the platform is loaded, the sensor particularly measures the deformation of the deformation element indirectly by detecting a change in distance between the pin and the probe. This arrangement provides a precise method for assessing the load on the platform by translating the physical deformation of the deformation element into a measurable change in distance, which the sensor can then quantify. This enhances the accuracy and reliability of the load measurement process. By focusing on the change in distance between the pin and the probe, the system can effectively capture minute variations in deformation, thereby offering a more sensitive and responsive measurement of the load. This improvement is particularly beneficial in ensuring the safety and stability of the ramp when in use, as it allows for real-time monitoring of the load conditions. Additionally, this method of indirect measurement reduces the complexity and potential points of failure within the load measurement arrangement, as it relies on the straightforward detection of distance changes rather than more intricate or less reliable measurement techniques. In particular, the pin defines a first measuring point while the probe defines a second measuring point. The probe is preferably fixedly connected, in particular does not move relative to the probe. In a preferred embodiment, the probe is fixedly connected to a side plate of the bridge. Preferably, the probe is part of or realizes the sensor. Preferably, when the platform is loaded, the pin moves along a predefined compression path, in particular when the platform is in entry position, wherein the probe is preferably aligned with this compression path and located spaced form the pin in a direction opposite to the direction in which the pin moves along said compression path when the platform is loaded. In particular, when the platform is not loaded, the probe and the pin are spaced from each other by a first distance (zero load distance). When the platform is loaded, the pin particularly moves away from the pin thereby increasing the distance between pin and probe up to second distance (load distance). Based on the difference of the zero load distance to the second distance or by the second distance alone, the load can be calculated, in particular by a formular and/or a table, for example as described above.

In a further implementation of the foldable ramp according to the first aspect, the sensor is a hall sensor, a capacity sensor or an induction sensor. In particular, the deformation element, when subjected to a load, changes its shape or structure in an elastic manner. This deformation is then detected by the sensor, which can be either a hall sensor or a capacity sensor. A hall sensor operates by detecting changes in the magnetic field caused by the deformation of the deformation element, in particular by the change in distance between the two measuring points discussed above, thereby providing an indirect measurement of the load. On the other hand, a capacity sensor measures changes in capacitance resulting from the deformation of the element, in particular by the change in distance between the two measuring points discussed above, offering another method of indirectly measuring the load. The introduction of these specific types of sensors enhances the precision and reliability of the load measurement process. Hall sensors provide robustness and ability to function in various environmental conditions, making them particularly suitable for automotive applications where durability and accuracy are crucial. Capacity sensors, meanwhile, offer high sensitivity and can detect minute changes in deformation, providing a detailed and accurate measurement of the load. By incorporating these sensors, the foldable ramp benefits from improved load measurement capabilities, ensuring that the deformation of the element is accurately captured and translated into meaningful data regarding the load. The hall sensor or the capacity sensor is preferably designed to measure a change in a magnetic field (hall sensor) or capacity (capacity sensor), when the platform is loaded, in particular when the space between the previously described pin and probe (measuring points) changes in reaction to the load of the ramp. The hall sensor or the capacity sensor may be located in the previously described probe. The indirect load measurement may be realized by directly allocating a change in the magnetic field (hall sensor) or capacity (capacity sensor) to a weight, e.g. by means of a table or a formula, or by first allocating the measured change in magnetic field (hall sensor) or capacity (capacity sensor) to a change in distance, e.g. by means of a table or a formula, and then allocating the change in distance to a load, e.g. by means of a table or a formula. Preferably, the hall sensor is designed to continuously detect, in particular measure, deformation of the deformation element, in particular to continuously measure changes of a magnetic field. It was found that the use of a hall sensor for this purpose, in particular in combination with the previously described deformation element, in particular with the described dimensions and materials, allows such accurate measurements that the measurement arrangement can accurately measure load of the platform as well as detect uneven surfaces the passenger car is standing on. In a less preferred embodiment, an induction sensor, in particular an induction proximity sensor, may be used, wherein a trigger signal may be emitted once the deformation element reaches a defined limit.

In a further implementation of the foldable ramp according to the first aspect, the deformation element comprises or consists of an elastic material, preferably of an elastomere, more preferably of rubber or polyurethan, most preferably polyurethan. The choice of material for the deformation element influences the communication between the components involved in load measurement. Rubber and polyurethane are both elastomers having flexibility and ability to return to their original shape after deformation, making them suitable for applications where elastic deformation is required. Polyurethane, in particular, is favored due to its superior mechanical properties, including higher load-bearing capacity, durability, and resistance to wear and tear, which enhances the reliability and longevity of the load measurement arrangement. The use of these materials ensures that the deformation element can accurately reflect changes in load through its deformation, which is then detected by the sensor. This communication mechanism between the deformation element and the sensor is important for the indirect measurement of the load, as the sensor relies on the deformation characteristics of the element to provide precise load data. The use of materials like rubber or polyurethane optimizes the performance of the load measurement arrangement, ensuring that it can consistently and accurately measure loads under various conditions. The use of polyurethan instead of rubber is particularly preferred as Polyurethan deteriorates significantly less fast than rubber so that it remains elastic for a longer time thereby ensuring the function of the load measurement arrangement for a longer time. This improvement in material choice enhances the overall functionality of the ramp, making it more reliable and effective in its intended application of providing wheelchair access to passenger cars.

In a further implementation of the foldable ramp according to the first aspect, the deformation element has a hollow-cylindrical shape with an outer diameter of 10 mm to 100 mm, preferably 15 mm to 80 mm, more preferably 20 mm to 60 mm, most preferably 25 mm to 40 mm, for instance 32 mm or 44 mm, wherein 32 mm has been found to be particularly advantageous. The deformation element, being hollow-cylindrical, undergoes elastic deformation when subjected to a load, which is then detected by the sensor. The sensor measures the deformation of the hollow-cylindrical element, thereby indirectly determining the load applied to the platform. The introduction of the hollow-cylindrical shape allows housing the previously described pin in the cavity of the hollow cylindrical shape thereby allowing a direct introduction of the load force into the deformation element which increases the deformation caused by a certain weight compared to solutions like strain gauges on the platform, where the load may only indirectly deform the deformation element, namely as a consequence of deforming the platform. Such shape of the deformation element brings several advantages. Firstly, the specified shape and dimensions ensure that the deformation element can effectively and reliably deform under load, providing accurate measurements of the load through the sensor. The range of outer diameters specified, from 10 mm to 100 mm, allows for flexibility in design and adaptation to different load requirements and structural constraints of the ramp. The preferred ranges further refine the dimensions to ensure optimal performance and compatibility with various ramp designs and load conditions. By narrowing down the dimensions to the most preferred range of 25 mm to 40 mm, it is ensured that the deformation element achieves a balance between structural integrity and sensitivity to deformation, enhancing the accuracy and reliability of the load measurement system. This detailed specification of the deformation element's shape and dimensions contributes to the overall functionality and efficiency of the foldable ramp, ensuring that it can safely and effectively accommodate wheelchair access while providing precise load measurements to prevent overloading and ensure user safety.

A second aspect of the invention, which may be combined with the first aspect and preferably it's embodiments, provides a foldable ramp, in particular according to any of the preceding claims, for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and a measuring arrangement, in particular a load measurement arrangement, comprising two measuring points changing their distance to each other in at least one status selected form a load of the platform and/or an uneven ground the passenger car is standing on, in particular changing their distance to each other when the platform is loaded, and a sensor for indirectly measuring the at least one status, in particular the load by detecting, in particular measuring, the change in distance. The advantages of this aspect include the ability to accurately measure the load on the platform without direct weight measurement, enhancing the safety and reliability of the ramp. Compared to the first aspect, the change in distance must not necessarily be realized by the elastic deformation of a deformation element. For example, instead of an elastic deformation of a deformation element, a gas damper may be used allowing a relative movement, for example of the plate, when the platform is loaded, leading to a change in distance between the two measuring points. However, this implementation is also beneficial for the second aspect of the invention and may thus be incorporated therein.

The sensor may be a hall sensor or a capacity sensor. Detecting the change in distance may be understood as detecting a change of a signal measured by the sensor, for example a change in the magnetic field, if the sensor is a hall sensor, or a change in capacity, when the sensor is a capacity sensor. Thus, "detecting the change in distance" as used herein may not necessarily require measurement of the change in distance. Rather, it might be sufficient to measure a change of the measured signal and deducing, e. g. based on a table or a formula, that a change in distance, in particular the value of change in distance, occurred. Further, it might be sufficient to deduce directly from the measured signal, e.g. based on a table or a formula, the load of the platform without necessarily deducing the change in distance. Contrary thereto, "measuring" the change in distance may be understood as deducing from the measured signal the change in distance before deducing the load of the platform based on the deduced distance. However, also in the case of "measuring" the change in distance, it shall be clear that an indirect measurement may be sufficient where the change in distance is not measured directly but deduced from the change of another measured signal, such as a change in the magnetic field or a change of capacity.

Preferably, a first measuring point of the two measuring points is movable relative to a second measuring point of the two measuring points, wherein the second measuring point is preferably not movable relative to the first measuring point. The first measuring point may be a pin, particularly a fitted pin / fitted bolt, in particular the head of a fitted pin / fitted bolt. The pin is preferably surrounded by a deformation element, in particular a deformation element as described with respect to the first aspect and preferably its embodiments. Preferably, the deformation element is deformed when the platform is loaded allowing the pin to move into the space provided by the deformation of the deformation element thereby increasing the space between the two measuring points. Preferably, the second measuring point is fixedly connected relative to the ramp, preferably to the bridge, more preferably to a side plate of the bridge. Particularly preferred, the second measuring point comprises or consists of the sensor.

"Measuring points" as used herein may be understood as referring to a specific location on the platform, in particular of the probe and the pin, e.g. a screw head of a screw comprising the pin, where the distance changes under load.

In a first implementation of the foldable ramp according to the second aspect, the change in distance is caused in that one of the measuring points is a fix measuring point remaining substantially in the same position in the at least one status, in particular when the ramp is loaded, while the other measuring point is a movable measuring point moving towards or away from the fixed measuring point, in the at least one status, in particular when the ramp is loaded. Preferably, the movable measuring point is the previously described pin being mounted to a side plate of the bridge. This configuration enhances the accuracy and reliability of the load measurement process. By having one measuring point fixed and the other movable, the system ensures that the change in distance is directly correlated to the load applied to the ramp. This arrangement simplifies the detection of load variations and minimizes potential errors that could arise from both measuring points being movable. The fixed measuring point provides a stable reference, while the movable measuring point reacts to the load, thereby offering a clear and precise measurement of the load based on the change in distance between the two points. This combination of fixed and movable measuring points, along with the sensor, represents a significant advancement in the design and operation of foldable ramps, ensuring that the ramp can reliably support the weight of a wheelchair and its occupant, thereby enhancing the overall user experience and safety.

In a further implementation of the foldable ramp according to the second aspect, the fix measuring point is fixedly connected to a bridge, in particular to a side plate of a bridge, of the foldable ramp and/or the movable measuring point is located or comprised in a pin, in particular a pin being surrounded by a deformation element which is elastically deformed in the at least one status, in particular when the platform is loaded, in particular wherein the deformation element is located in a mounting hole of the bridge, in particular of a side plate of a bridge, of the foldable ramp. The communication between components is facilitated by the interaction between the fixed and movable measuring points, where the deformation element supports translating the physical load into measurable changes in distance. The fixed connection of the measuring point to the bridge ensures that one point remains constant, allowing the sensor to accurately detect changes in distance caused by the load on the platform. The movable measuring point, being part of a pin surrounded by a deformation element, allows for precise measurement of load-induced changes. The deformation element's elastic properties enable it to respond to varying loads by altering its shape, which subsequently affects the distance between the measuring points. This change in distance is captured by the sensor, which indirectly measures the load. This arrangement enhances the functionality and reliability of the load measurement system. By utilizing a fixed measuring point connected to a bridge and a movable measuring point within a pin surrounded by a deformation element, the system ensures accurate and consistent load measurement. The elastic deformation of the element provides a responsive mechanism for detecting load changes, improving the ramp's ability to accommodate different weights and ensuring safe and efficient wheelchair access.

A third aspect of the invention, which may be combined with the first aspect and preferably it's embodiments, provides a foldable ramp, in particular according to any of the preceding claims, for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, a bridge for rotatably connecting the platform with the vehicle, a mounting between the platform and the bridge allowing the platform to move relative to the bridge when the platform is loaded, and a measuring arrangement, in particular a load measuring arrangement, with a sensor for indirectly measuring at least one status selected form a load of the platform and/or an uneven ground the passenger car is standing on, in particular the load, by measuring the movement of the platform. One advantage of the third aspect includes the ability to monitor the load on the platform to ensure safety and stability during use. The sensor-based measuring arrangement provides a reliable method for assessing the load, contributing to the overall functionality and user experience of the ramp. In particular by allowing the platform to move relative to the bridge when the platform is loaded, the third aspect provides an easy and reliable way of measuring load on the platform, e.g. by measuring the movement of the platform. This may be realized for example as described in the second aspect, e.g. by measuring a change in distance between two measuring points. One measuring point may be, at least in the entry position, fixedly connected to the platform, e.g. to a side wall of the platform, while the other measuring point may be fixedly connected, e.g. at least in the entry position, with respect to the passenger car, e.g. to the bridge, such as a bridge side plate. The two measuring points and the measurement of their change in distance may be realized as described with respect to the first and/or second aspect of the invention. The mounting is preferably realized by the deformation element, in particular surrounding a pin connecting the platform with the bridge, as described with respect to the first aspect of the invention but may alternatively also be realized, for instance by a gas damper.

In a first implementation of the foldable ramp according to the third aspect, the sensor measures the movement of the platform by measuring a change in distance between a measuring point following the movement of the platform and a measuring point being fixedly connected to the bridge. This provides a precise method for monitoring the load on the platform by utilizing the relative movement between two distinct points: one that moves with the platform and one that remains stationary with the bridge. This configuration allows for an accurate assessment of the load based on the change in distance between these two points, thereby enhancing the reliability and effectiveness of the load measurement system. This brings a significant improvement in the ability to monitor the load on the platform in real-time, ensuring that the ramp's structural integrity and safety are maintained during use. By measuring the movement indirectly through the change in distance, the system can provide a more robust and less intrusive means of load detection, which is crucial for the safe operation of the ramp. This advancement contributes to the overall functionality and user safety of the foldable ramp, making it a more dependable solution for wheelchair access to passenger cars.

A fourth aspect of the invention, which may be combined with the first, second and/or third aspect and preferably it's embodiments, provides a foldable ramp, in particular according to any of the preceding claims, for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and a measuring arrangement for detecting, in particular measuring, at least one status selected form a load of the platform and/or an uneven ground the passenger car is standing on, based in part on temperature information. Preferably, the measuring arrangement of the fourth aspect is realised as described in any of the first to the third aspect and/or their embodiments. It was found that measurement of loads of the platform and/or of uneven grounds the passenger car is standing on may depend on ambient temperature and/or on the temperature of a measurement element, in particular of a deformation element, such as the deformation element described above. Therefore, by taking into account temperature information, the precision of the measurement can be increased allowing for more reliable detection, in particular measurement, of load of the platform and/or uneven ground the passenger car is standing on.

The temperature information may comprise or consist of the ambient temperature and/or the temperature of a measurement element, in particular a deformation element. The detection of the at least one status based in part on the temperature information may comprise taking the temperature information into account when detecting or calculating platform load and/or uneven ground. This may for example comprise using a formula to calculate platform load and/or uneven ground which comprises the temperature information as a variable or selecting a curve or table of platform load and/or uneven ground information for different indications of a measurement element, in particular deformation values of a deformation element or changes in a magnetic field of a sensor, in particular hall sensor, depending on the temperature information. For example, the measurement arrangement may comprise at least one processor and at least one memory storing instructions that, when executed by the at least one processor, causes to detect, in particular calculate, a load of the platform and/or uneven ground information based on an indication. For this purpose, the memory storing instructions may comprise information, for example a table or a formula, allocating the indication to a load or uneven ground information. For example, multiple tables for different temperature information can be provided. For example, a table for an ambient temperature of 25 °C may allocate a deformation of 0,5 mm to a load of about 500 Newton, a deformation of 1 mm to a load of about 1.000 Newton, a deformation of 2 mm to a load of about 1.500 Newton, a deformation of 2,5 mm to a load of about 2.000 Newton, a deformation of 3 mm to a load of about 2.500 Newton, a deformation of 3,5 mm to a load of about 3.000 Newton, a deformation of 4 mm to a load of about 3.500 Newton, a deformation of 4,5 mm to a load of about 4.250 Newton, a deformation of 5 mm to a load of about 5250 Newton, and/or a deformation of 5,5 mm to a load of about 6.500 Newton. The term "about" with respect to a load quantified in Newton is in particular to be understood as encompassing a deviation from the loads indicated of ± 300 Newton, preferably ± 200 Newton, more preferably ± 100 Newton. Contrary thereto, for example, a table for an ambient temperature of 15 °C may allocate a deformation of 0,5 mm to a load of about 800 Newton, a deformation of 1 mm to a load of about 1.300 Newton, a deformation of 2 mm to a load of about 1.800 Newton, a deformation of 2,5 mm to a load of about 2.300 Newton, a deformation of 3 mm to a load of about 2.800 Newton, a deformation of 3,5 mm to a load of about 3.300 Newton, a deformation of 4 mm to a load of about 3.800 Newton, a deformation of 4,5 mm to a load of about 4.600 Newton, a deformation of 5 mm to a load of about 5800 Newton, and/or a deformation of 5,5 mm to a load of about 6.800 Newton.

In one implementation of the fourth aspect, the measuring arrangement comprises at least one measurement element providing an indication for the at least one status, wherein the indication depends on the at least one status and a temperature of the measurement element. The measurement element may be realized as a deformation element, in particular as described with respect to the first aspect and/or its embodiments, or by the two measuring points, in particular as described with respect to the second aspect or its embodiments, and/or by a mounting and a sensor, in particular as described with respect to the third aspect and/or its embodiments. The indication may comprise information about a deformation of a deformation element, information about the change in distance between two measuring points and/or a movement of the platform. The indication may be allocated, for example by a table or a formula, to the at least one status, for example to a load of the ramp and/or to different values, such an inclination or a hight differences between to points, for example wheels, of the passenger vehicle. This allocation may differ depending on the temperature information, for example by means of a formula using the temperature information as input parameter or by different tables for different temperature information values, for example for different temperature windows, e.g. ambient temperature windows.

In another implementation of the fourth aspect which can be combined with the previous implementation, the at least one measurement element is a deformation element, in particular comprising or consisting of elastic material, preferably of an elastomer, more preferably of rubber or polyurethan, most preferably of polyurethan, wherein the indication comprises an elastic deformation resulting from the at least one status, in particular wherein the elastic deformation depends on the temperature of the deformation element. This implementation is preferably realized as described with respect to the first aspect of the invention, in particular as described for one or more of its embodiments/implementations. According to this implementation, different values of deformation for a certain temperature information, in particular ambient temperature and/or temperature window, may be allocated to certain platform load values and/or uneven ground values. Preferably, for a different temperature information, in particular ambient temperature and/or temperature window, the deformation values are allocated to different load values and/or uneven ground values. Alternatively to the allocation of deformation values, the indication may comprise sensor data, for example a change in a magnetic field, for example in case of using a hall sensor, being indicative for the deformation values.

In another implementation of the fourth aspect, which can be combined with the previous implementations, the measurement arrangement comprises at least one processor and at least one memory storing instruction that, when executed by the at least one processor, causes to calculate the at least one status based on the indication and the temperature information.

In another implementation of the fourth aspect, which can be combined with the previous implementations, the measuring arrangement comprises an interface for receiving the temperature information, for example from a board computer of the passenger car, and/or a sensor for measuring the temperature information, in particular ambient temperature information. The sensor may be mounted on the foldable ramp and/or inside the passenger car or outside the passenger car.

A fifth aspect of the invention, which may be combined with the first, second, third and/or fourth aspect and preferably it's embodiments, provides a foldable ramp for wheelchair access to a passenger car rear door, comprising a platform which can be arranged in several positions including an entry position wherein the platform is folded out of the car to allow wheelchair access to the car, a transport position wherein the platform is arranged in the car in an upright position and a passive position wherein the platform is arranged in the car in a lying position, and a measuring arrangement for detecting, in particular measuring, an uneven ground the passenger car is standing on. When the passenger car stands on uneven ground, accessing the ramp, for example with a wheelchair, can be dangerous. Further, on uneven ground, moving the platform between its different positions, in particular from the transport position or the passive position into the entry position or vice versa can cause damages on the ramp because the weight of the ramp can be distributed irregularly on mountings of the foldable ramp thereby damaging the ramp. Therefore, detecting, in particular measuring, uneven ground enhances safety of the foldable ramp and reduces the risk of ramp damage. Measuring uneven ground - compared to only detecting it - may comprise measuring a degree of unevenness, e.g. slope of a street or a hight difference between two points, e.g. between two wheels, such as the back wheels, of the passenger car. This may allow to differentiate between a slightly and therefore not critical uneven ground and a highly and therefore critical uneven ground. The uneven ground may be detected, in particular measured, indirectly, e.g. by measuring a difference in load and/or deformation at different points of the ramp, in particular at different deformation elements of the ramp. Additionally or alternatively to detecting, in particular measuring, an uneven ground the passenger car is standing on, the fifth aspect may implement detecting, in particular measuring, a deflection of the platform, in particular by measuring a difference in load and/or deformation at different points of the ramp, in particular at different deformation elements of the ramp. The foldable ramp may be designed to prohibit movement of the ramp, for example from an entry position into a transport and/or passive position or vice versa, when an uneven ground or a ramp deflection is detected, in particular if a threshold value thereof is exceeded.

In a first implementation of the fifth aspect, the foldable ramp comprises an alert device, in particular a light or sound source, for emitting an alert signal when the measuring arrangement detects an uneven ground the passenger car is standing on. This implementation is particularly advantageous as it may improve safety and reduce the risk of damaging the ramp in critical situations, e.g. in that the safety alert causes a user to not move the ramp in such situation, while it still allows to deploy the ramp if needed, for example in dangerous situations, such as an accident or if a wheel chair needs to urgently exit the passenger car via the rear door.

In another implementation of the fifth aspect, which can be combined with the previous implementation, the measuring arrangement comprises a first measurement element providing a first indication and a second measurement element providing a second indication, in particular wherein the measurement arrangement comprises at least one processor and at least one memory storing instructions that, when executed by the at least one processor, causes to detect an uneven ground when a difference between the first indication and a second indication is detected, in particular exceeds a threshold value, and/or when the first and/or second indication indicates a deflection of the platform. The first indication and the second indication may indicate, in particular be, a deformation of a first or a second deformation element, in particular as described with respect to the first aspect of the invention, a change in distance between two measuring points, in particular as described with respect to the second aspect of the invention, and/or a movement of the platform, in particular as described with respect to the third aspect of the invention. In another implementation of the fifth aspect, which can be combined with the previous implementations, the first measurement element and the second measurement element are deformation elements deforming differently when the passenger car stands on an uneven ground, in particular wherein the first indication indicates a deformation of the first deformation element and the second indication indicates a deformation of the second deformation element. The first and second indication may indicate the deformation either by comprising or consisting of a measured deformation or by indicating such deformation, e.g. by a change in a magnetic field caused by the deformation of the deformation element. Preferably, the first and the second deformation element are designed as described with respect to the first aspect of the invention or it's embodiments. Preferably, when executed by the at least one processor, the memory storing instruction causes to compare a difference between the first indication and the second indication being indicative for a first deformation and the second deformation with a threshold value and to emit an alert signal when the threshold value is exceeded. By this preferred implementation, the use of deformation elements can be used for two purposes, namely the load measurement and the detection of ramp deflection/uneven ground the passenger car is standing on. In particular this approach makes it possible to compare deformation on both sides of the ramp and to define acceptable deformation differences between both sides, in particular between the left and right. As a result, the foldable ramp can in particular detect ramp deflection when deployed on uneven surfaces and alert the user accordingly.

It has been found to be particular advantageous to combine the fourth and fifth aspect of the invention because the use of temperature information allows to take into account that mechanical properties of deformation elements, in particular if they comprise or consist of polyurethan, depend on the ambient temperature / deformation element temperature when detecting, in particular measuring, uneven ground/ramp deflection, thereby providing more accurate and reliable results.

In another implementation of the fifth aspect, which can be combined with the previous implementations, the first deformation element and the second deformation element are elastically deformed when the platform is loaded and/or when the passenger car stands on an uneven ground, and wherein the measuring arrangement comprises a first sensor for detecting, in particular measuring, the deformation of the first deformation element and a second sensor for detecting, in particular measuring, the deformation of the second deformation element. Preferably, the first and the second sensor are hall sensors measuring a change in the magnetic field caused by a compression of the first and second deformation element.

### Brief description of drawings

The invention will be explained in detail by means of the following exemplary drawings showing in
- Fig. 1: a perspective view on a section of a floor of a passenger car and a foldable ramp according to the invention being connected to the passenger car, wherein the foldable ramp comprises a platform in transport position,
- Fig. 2: a side view on the foldable ramp shown in Fig. 1,
- Fig. 3: a side view on section A of the foldable ramp shown in Fig. 2, wherein the platform is in transport position,
- Fig. 4: a side view on section A of the foldable ramp shown in Fig. 2, wherein the platform is in an intermediate position between transport position and passive position,
- Fig. 5: a side view on section A of the foldable ramp shown in Fig. 2, wherein the platform is in passive position,
- Fig. 6: a perspective view on a bridge of the foldable ramp shown in Fig. 1,
- Fig. 7: a perspective view on a bridge of a foldable ramp not according to any of the first to the third aspect of the invention,
- Fig. 8: a perspective view on section H of the platform side wall of the platform shown in Fig. 1,
- Fig. 9: a perspective view on the inside of section C of the bridge of the foldable ramp shown in Fig. 6, wherein the platform is faded out to show the inside of the bridge,
- Fig. 10: a perspective view on the outside of section C of the bridge of the foldable ramp shown in Fig. 6, wherein the platform is faded out to show the inside of the bridge,
- Fig. 11: an enlarged view on section E of the bridge shown in Fig. 10,
- Fig. 12: a side view on the outside of section C of the bridge of the foldable ramp shown in Fig. 6,
- Fig. 13: a perspective view on a bridge side plate of a foldable ramp according to the first to the third aspect of the invention,
- Fig. 14: an inside view on the load measurement arrangement encircled as section F in Fig. 3 to 5,
- Fig.15: a side view on the load measurement arrangement along direction F indicated in Fig. 14,
- Fig. 16: a deformation-force diagram for different deformation elements,
- Fig. 17: a table showing individual values from the deformation-force diagram of Fig. 16 for the different deformation elements,
- Fig. 18: a side view on an alternative embodiment of a measurement arrangement,
- Fig. 19: a perspective view on the measuring arrangement shown in Fig. 18, and
- Fig. 20: a perspective, exploded view on the other side of the measuring arrangement shown in Fig. 18.

### Preferred embodiments of the invention

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention. However, it will be apparent to those skilled in the art having the benefit of the present disclosure that the various aspects of the invention claimed may be practiced in other examples that depart from these specific details.

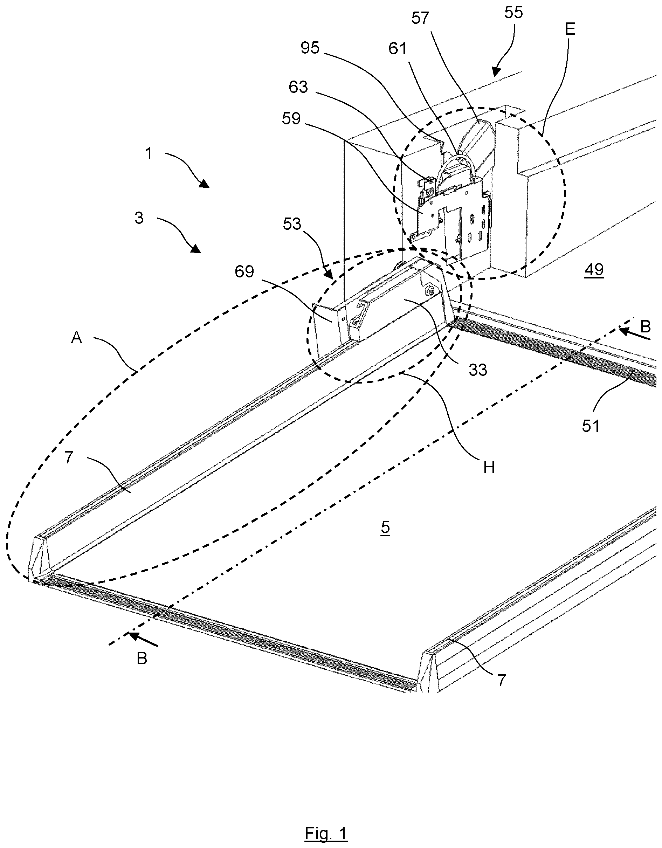

Fig. 1 shows a section of a floor 49 of a passenger car and a foldable ramp 1 for wheelchair access to the passenger car rear door. The foldable ramp 1 is connected to the passenger car via a bridge 51, which in Fig. 1 has a corrugated surface to reduce the risk of slippage for a passenger or a wheelchair entering the passenger car from the platform 3 or the platform 3 from the passenger car. The foldable ramp 1 comprises a platform 3 which can be arranged in several positions including an entry position wherein the platform 3 is folded out of the car to allow wheelchair access to the car, a transport position wherein the platform 3 is arranged in the car in an upright position and a passive position wherein the platform 3 is arranged in the car in a lying position. In Fig. 1, the platform 3 is arranged in entry position. The platform comprises a platform floor 5 and two platform side walls 7 protruding from the platform floor 5. The bridge 51 rotatably connects the platform 3 to the passenger car in that the platform 3 can rotate from the transport position into the entry position and vice-verse. The foldable ramp 1 further comprises a pivot mechanism 53 for transferring the platform between the transport position and the passive position and vice versa by a rotational translational movement. The pivot mechanism 53 is realised in part by a rail 33 of a slide-rail arrangement and a bridge side plate 69. The foldable ramp 1 further comprises two first locking mechanism 55, one of which is shown in Fig. 1 with a locked state, in which a movement of the platform 3 from the transport position into the passive position is blocked, and a release state, in which the platform 3 can move from the transport position into the passive position. The first locking mechanism 55 comprises an electric actuator 57 and is covered by a plate 59. The electric actuator 57, when actuated, pulls a wire 61 which is connected to a locking means 63 for switching between the locked state and the release state. The first locking mechanism 55 further comprises an emergency lever 95 for pulling the wire 61 independently from the electric actuator 57.

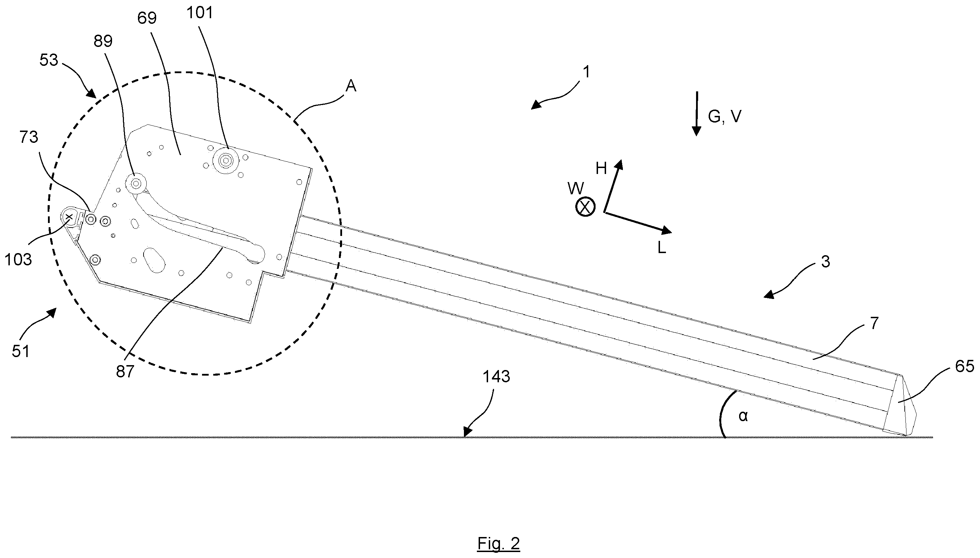

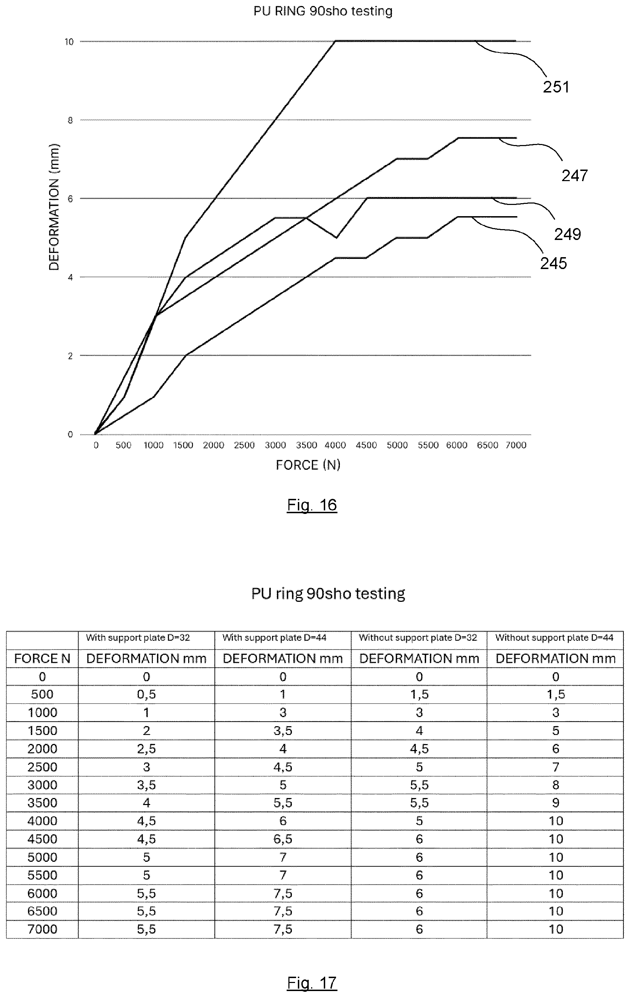

Fig. 2 shows a side view on the foldable of Fig. 1, wherein the platform 3 is in entry position. The platform 3 of the foldable ramp 1 extends in longitudinal direction L and in width direction W, wherein the platform side walls 7 protrude in height direction H from the platform floor 5 (not shown in Fig. 2). In longitudinal direction L on the side facing away from the passenger car, in particular the bridge 51, a cover 65 is provided on each platform side wall 7. The covers 65 can be made of plastic. Figure 2 further shows a bridge side plate 69 and a part of an extrusion profile 73 of the bridge 51. The bridge 51 is rotatable around a rotation axis 103 for transferring the platform 3 from the transport position into the entry position and vice versa. Fig. 2 furthers shows parts of the pivot mechanism 53 for transferring the platform 3 from the passive position into the transport position and vice versa, namely a pin 89 and a groove 87 forming together a pin-groove arrangement, and a rotational bearing 101 of a slide 83 of a slide-rial arrangement. As will be described in detail below, the rotational bearing 101 comprises a deformation element 215 being part of a load measurement arrangement 217, wherein the deformation element 215 is elastically deformed when the platform is loaded, wherein the measurement arrangement comprises a sensor (not shown in Fig. 2) for indirectly measuring the load by measuring the deformation of the deformation element 215, e.g. a change in distance between two measuring points caused thereby, according to the first aspect of the invention. As can be seen in Fig. 2, when a wheelchair accesses the ramp, the weight force of the wheel chair acting in Gravitation direction G is transferred from the platform 3 into the deformation element causing the elastic deformation based on which the load is measured indirectly, for example based on the deformation force diagram shown as Fig. 16 and/or the table shown as Fig. 17.

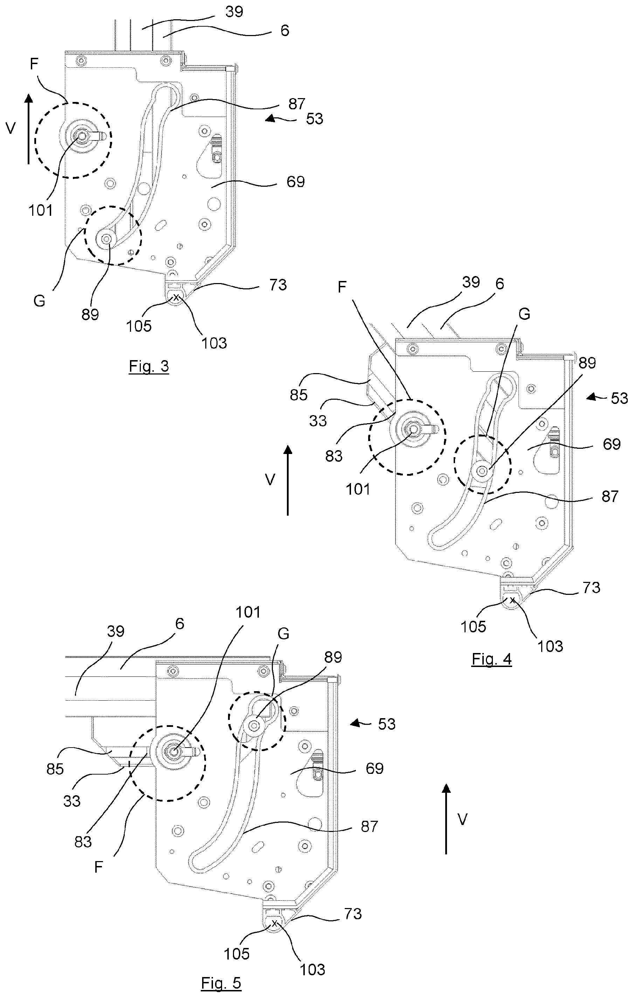

Fig. 3 to 4 show side views on section A of the foldable ramp shown in Fig. 2 to illustrate the functioning of the pivot mechanism 53 of the foldable ramp 1. In particular, Fig. 3 shows the platform 3 in transport position, Fig. 4 shows the platform 3 in an intermediate position between transport position and passive position and Fig. 5 shows the platform 3 in passive position. As can be seen, when the platform moves from the transport position to the passive position, the pin 89 of the pin groove arrangement moves along the curved groove 87. As the curved groove 87 extends in vertical direction and is implemented in the bridge side plate 69 which does not move between the transport and the passive position, the pin 89 moves in vertical direction V too. As the pin 89 is connected to the platform side wall 7, the platform side wall 7 moves in vertical direction V too. In other words, between the passive position and the transport position, the platform 3 conducts not only a rotational movement but also a translational movement, e.g. allowing in total a rotational translational movement. Thanks to the movement in vertical direction V, the platform 3 can be lowered when moving from the passive position to the transport position so that the platform 3 comes closer to the ground 143 (see Fig. 2) from which a wheelchair accesses the platform 3 in entry position. This allows the ramp to be arranged in a less steep angle α (see Fig. 2) to the ground 143 making it easier for a wheelchair to access the platform 3. As can further be seen by the comparison of Fig. 3 to 5, when the platform 3 moves from the transport position to the passive position, a slide 83 (wee Figs.4, 5 and 13) of the slide-rail arrangement moves translationally inside the rail 33 thus allowing a further translational movement component of the platform 3. As can be seen in Fig. 3 to 5, the slide 83 is rotatably connected to the bridge side plate 69 by a rotational bearing 101. For moving from the transport position (Fig. 3) into the entry position, the bridge 51 is rotatably mounted around a rotation axis 103 which is defined by a rotation shaft channel 105, which has in the present example a D-shaped cross section, for receiving a rotation shaft (not shown in Fig. 3 to 5).

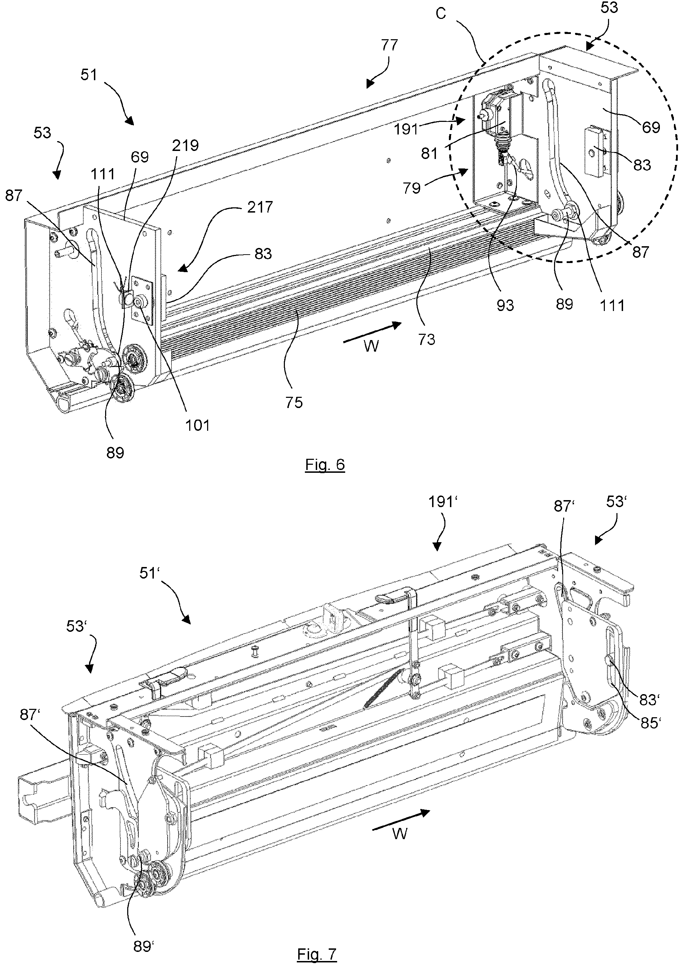

Fig. 6 shows a perspective view on a bridge 51 of the foldable ramp 1 shown in Fig. 1 comprising parts for a pivot mechanism 53 on each side of the foldable ramp 1 in width direction W. Each pivot mechanism 53 comprises slide 83 forming together with the previously mentioned rail 33 a slide-rail arrangement of the respective pivot mechanism 53. As can be seen, the slide 83 is rotatable connected to a bridge side plate 69 by a rotational bearing 101. Each slide 83 comprises a T-shaped cross section being adapted to a T-shaped cross section of a slide channel 85 (see Fig. 1) in the rail 33 thereby providing a slide-rail arrangement with defined clearance between the slide 83 and the rail 33 in width direction W. Further, each pivot mechanism 53 comprises a pin-groove arrangement with a curved groove 87 being integrated into each bridge side plate 69 and a pin 89 being guided in the curved groove 87. Thanks to a bushing 111 being arranged between the pin 89 and the groove 87, the pin-groove arrangement has a defined clearance in width direction W. As can be seen, the bridge 51 comprises an extrusion profile 73, a reinforcing part 79 and an electric actuator 81 of a second locking mechanism 191 . Fig. 6 further shows the position of the load measurement arrangement 217 and it's sensor 219 on the bridge side plate 69.

Fig. 7 shows a perspective view on a bridge 51' of a foldable ramp not according to any of the first to the third aspect of the present invention as it does not comprise any load measurement arrangement. Further, contrary to Fig. 6, the foldable ramp 1' in Fig. 7 makes use of a pin 83' guided in a groove 33' without defined clearance in width direction W. In particular the pin 83' and the groove 33' do not comprise any structures avoiding or restricting relative movement between the pin 83' and the groove 33' in width direction W so that the pin-groove arrangement as such does not provide a defined clearance between pin 83' and groove 33'. The foldable ramp 1 in Fig. 7 comprises a further pin-groove arrangement with a pin 89' and a curved groove 87 which however also lack structures avoiding or restricting relative movement between the pin 89' and the curved groove 87 in width direction W so that the pin-groove arrangement as such does not provide a defined clearance between pin 89' and the curved groove 87.The bridge 51' does not comprise an extrusion profile and no reinforcing part 79. Fig. 7 further shows a second locking mechanism 191 being which does not make use of an electric actuator. Further, the bridge 51' of figure 7 does not make use of a weight measurment arrangement according to any of the first to the third aspect of the invention.

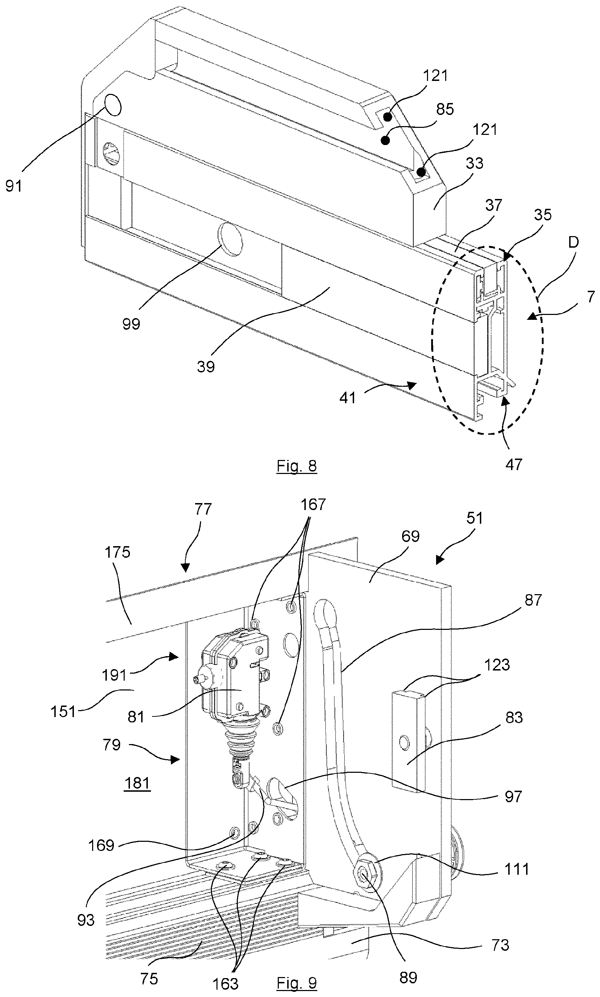

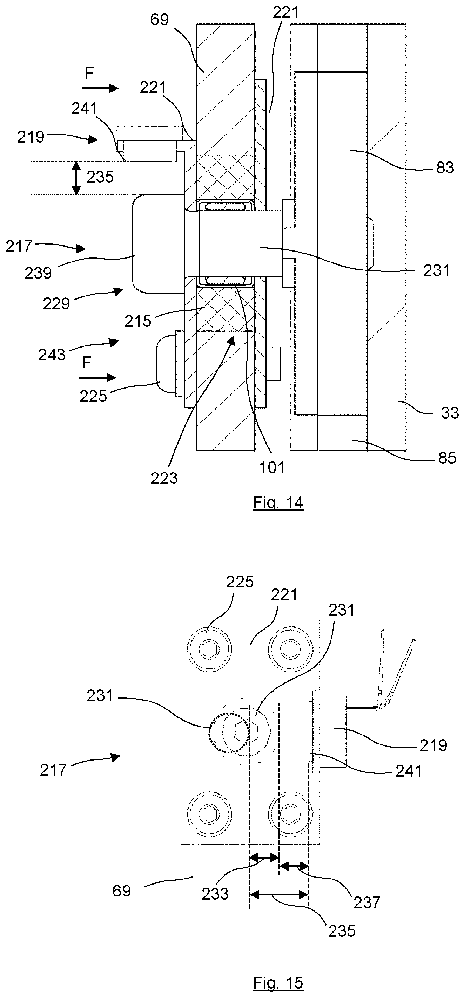

Fig. 8 shows a perspective view on section H of the platform side wall 7 of the platform 3 shown in Fig. 1. As can be seen in Fig. 8, the foldable ramp 1 comprises two light sources 37 and 39, in the form of LED strips, being located at the platform side wall 7. For this purpose, the platform side wall 7 comprises one slot 19 at the top 35 of the platform side wall housing the light source 37 and a slot 25 at the side / outside of the platform side wall 7 housing the light source 39. The slot 19 is further used for connecting the rail 33 of the carrier-rail arrangement of the pivot mechanism 53 to the bridge side wall 7. As can be seen, the rail 33 comprises a slide channel 85 and two slide guiding sections 121 being designed for receiving slide sections 123 (see Fig. 9). In the presently shown embodiment, when the platform 3 is loaded, the weight forces are transferred from the platform floor 5 into the platform side walls 7 and from the platform side walls7 into the slide rail. From the rail 33, the weight forces are transferred into the slide 83 and from the slide 83 into the deformation element 215 which will be described in detail with respect to Fig. 14.

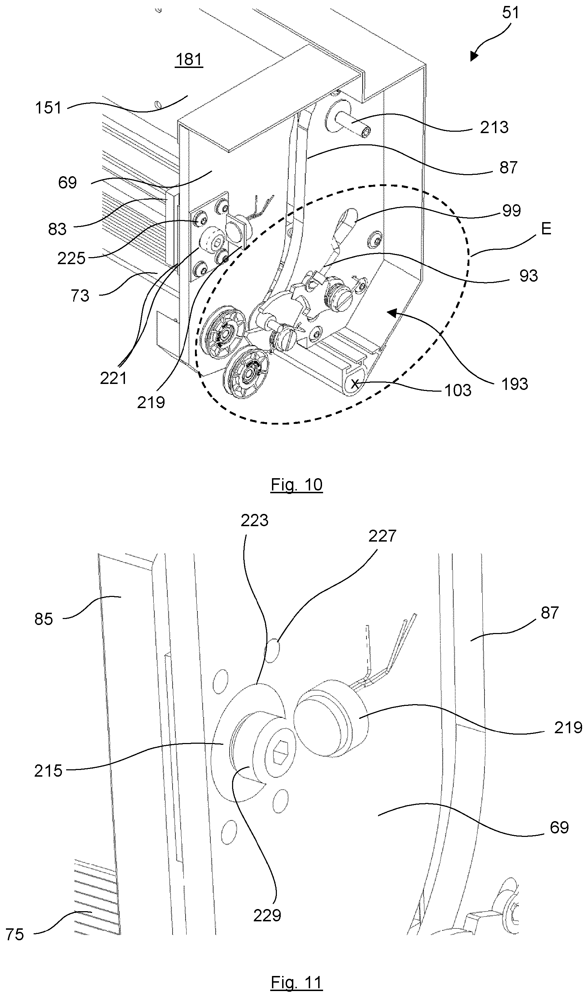

Fig. 9 shows a perspective view on the inside of section C of the bridge 51 of the foldable ramp 1 shown in Fig. 6, wherein the platform 3 is faded out to show the inside of the bridge 51. The bridge 51 comprises an extrusion profile 73 with corrugated surface 75, a bridge side plate 69, a bridge rear plate 77, a reinforcing part 79 in form of a steel inlay 79 and an actuator 81 of the second locking mechanism. As previously mentioned, the pivot mechanism comprises a slide-rail arrangement, wherein the rail can be seen for instance in Fig. 1 while the slide 83 can be seen in Fig. 9. The slide 83 has a T-shaped cross section corresponding to a T-shaped cross section of a slide channel 85 in the rail 33 (see Fig. 8) to provide a defined clearance between slide 83 and rail 33 in width direction W. In detail, the rail 33, in particular the slide channel 85, delimits in thickness direction T from both sides at least one, preferably two, slide guiding section, wherein the slide comprises at least one, preferably two, slide section 123 (see Fig. 9) protruding into the at least one slide guiding section, wherein the difference in thickness of the slide guiding section and the slide section 123 defines the clearance between the slide 83 and the rail 33. The bridge side plate 69 further comprises a curved groove 87 in which a pin 89 is arranged translationally movable to provide - in addition to the slide-rail arrangement - a pin-groove arrangement of the pivot mechanism 53. The pin 89 is connected to the rail 33, in particular by a mounting hole 91 (see Fig. 8) of the rail 33. Further, the actuator 81 is connected to a wire 93 for actuating locking means of the second locking mechanism 191. For allowing to mount the second locking means on the opposite side of the bridge side plate 69, the wire extends through an elongated hole 97 of the reinforcing part 79 and through an elongated hole 99 (see Fig. 10) of the bridge side plate 69.

Fig. 10 shows a perspective view on the outside of section C of the bridge 51 of the foldable ramp shown in Fig. 6, wherein the platform 3 is faded out, As can be seen, the wire 93 is connected with locking means 193 of the second locking mechanism so that, when the electric actuator is actuated, the wire pulls the locking means 193. Further, Fig. 10 shows the sensor 219 of the load measurement arrangement 217 while the deformation element 215 cannot be seen as it is located in a mounting hole 223 of a bridge side plate which mounting hole 223 is covered by two side plates 221 on both sides of the mounting hole 223 to reduce, in particular avoid, evasive deformation of the deformation element when the platform is loaded, more in particular to force the deformation element 215 into a substantially pure elastic compression when the platform is loaded. The side plates 221 are connected to the bridge side plate 69 by screws 225.

Fig. 11 shows an enlarged view on section E of the bridge shown in Fig. 10, with one side plate 221 faded out to show the screw holes 227 for connecting the side plate 221 and the deformation element 215 inside the mounting hole 223. As can be seen, the deformation element 215 is connected to the slide 83 via a screw 229 extending through the deformation element 215 and the mounting hole 223 into the slide 83.

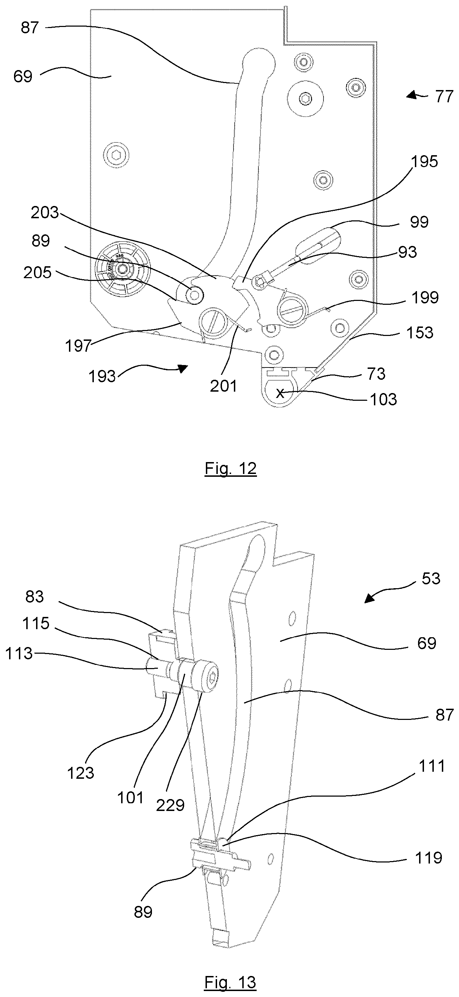

The locking means are described in detail with respect to Fig. 12 showing a side view on the outside of section C of the bridge 51 of the foldable ramp 1 shown in Fig. 6. The locking means 193 comprise a latch 195 and a latch lock 197. The latch 195 and the latch lock 197 are pivotably mounted to the bridge side plate. The latch lock 197 comprises a mouth 205. In a locked state of the second locking mechanism 191, the mouth directly engages with the pin 89 of the pin-groove arrangement of the pivot mechanism 53 in that a movement of the pin 89 along the groove 87 - and thus a movement of the platform from the transport position into the passive position - is blocked. For this purpose, the latch comprises a protrusion 207 engaging with a stopper 203 of the latch lock, in that the latch lock is prohibited from the locking position. To avoid unintended release of the latch lock 197, a torsion spring 199 is used which urges the protrusion 207 of the latch 195 against the stopper 203 of the latch lock 197. When the actuator 81 is actuated to switch into the release state, in which the platform can move from the transport position into the passive position, the wire 93 pulls the latch 195 against the force of the torsion spring so that the latch 195 pivots away from the latch lock, thereby allowing the latch lock 197 to also pivot out of the locking position. To ensure that the latch lock 197 automatically moves into the release position, a torsion spring 201 is used which urges the latch lock 197 into the release position in which the pin being spring loaded by the torsion spring 201 pulls the latch lock in that the pin 89 can leave the mouth 205 and move along the curved groove 87 so that the platform can transfer from the transport position into the passive position. As can be seen in Fig. 6, the foldable ramp 1 preferably makes use of two locking mechanism 193 with a locked state, in which a movement of the platform from the transport position into the passive position is blocked, and a release state, in which the platform can move from the transport position into the passive position, which can be actuated independently from each other.

Fig. 13 shows a perspective view on a bridge side plate 69 of a foldable ramp 1. For the purpose of illustration, the deformation element 215 and the side plate 221 are faded out to show that the slide 83 is connected to the bridge side plate 69 by means of a rotational bearing 101, which in the present figure is a roller bearing 101. The roller bearing 101 surrounds a pin 113 protruding through the slide 83 and the bridge side plate 69. In the present case, the pin 113 is part of the screw 229 engaging with a thread inside the slide 83. The pin 89 of the pin groove arrangement is also surrounded by a rotational bearing 115 in form of a roller bearing. The rotational bearing 115 is surrounded by a bushing 111 comprising a hollow cylindrical section 117 extending between the pin 89 and the groove 87, and one shoulder 119 on each side of the groove extending parallel to the bridge side plate 69, wherein the difference between the thickness of the bridge side plate 69 and the space between the two shoulders 119 in width direction W defines a clearance between the slide pin 89 and the groove 87.

Fig. 14 shows an inside view on the load measurement arrangement 217 encircled as section F in Fig. 3 to 5. The load measurement arrangement 217 comprises a deformation element 215 which is elastically deformed when the platform 3 is loaded and a sensor 219 for indirectly measuring the load by measuring the deformation of the deformation element 215 (first aspect of the invention). The deformation element 215 is part of a mounting for transferring weight forces from the platform 3 to a bridge 51 of the foldable ramp 1 when the platform 3 is loaded. The deformation element 215 is located in a mounting hole 223 of the bridge side plate 69. The deformation element 215 surrounds a pin, in particular a rotational bearing surrounding a pin, more in particular a roller bearing surrounding a pin 231 which is part of a screw 229. In particular, the pin 231 is part of the pivot mechanism 53 for pivoting the platform between the transport position and the passive position, in particular wherein the pin 231 is part of guiding means of the pivot mechanism 53, in particular of the slide-rail arrangement of the pivot mechanism. In particular, the pin 231 is connected with the slide 83 arranged in a slide channel 85 of the rail 33. The deformation element 215 is encased by side plates 221 on both sides of the mounting hole 223, to reduce, in particular avoid, evasive deformation of the deformation element 215 when the platform 3 is loaded, more in particular to force the deformation element 215 into a substantially pure elastic compression when the platform 3 is loaded.

When the platform 3 is loaded, the pin transfers weight forces from the platform 3 to the deformable element 215, thereby elastically compressing the deformation element 215 and moving over a compression distance 233 (See Fig. 15), e.g. in gravitational direction. As can be seen in Fig. 15, the compression distance 233 can be calculated by the difference between the distance 235 between the sensor 219 and the pin 231 when the platform 3 is loaded and the distance 237 between the sensor 219 and the pin 231 when the platform 3 is not loaded. For measuring the compression distance and/or the distances 235 and 237, the sensor can be realized for instance as hall sensor or capacity sensor. In particular, the distance is measured between the pin 231, in particular a screw head 239 of a screw 229 comprising the pin 231, and a probe 241, in particular a probe of the sensor 219. The deformation element 215 can comprises or consists of an elastic material, preferably of an elastomer, more preferably of rubber or polyurethan, most preferably polyurethan.

As can be seen in particular in Fig. 15, the load measurement arrangement 217 comprises two measuring points, in the present example the probe 241 and the screw head 239, changing their distance to each other when the platform 3 is loaded and a sensor 219 for indirectly measuring the load by detecting, in particular measuring, the change in distance, in the present example the compression distance 233 (second aspect of the invention). In the present embodiment, the change in distance is caused in that one of the measuring points, in the present example the probe 241, is a fix measuring point 241 remaining substantially in the same position when the platform 3 is loaded, while the other measuring point, in the present example the screw head 239, is a movable measuring point 239 moving towards or away from the fixed measuring point 241, when the platform 3 is loaded. The fix measuring point 241 is fixedly connected to the bridge side plate 69 of the foldable ramp while the movable measuring point 239 is part of a pin 231, in the present embodiment of the screw 229 comprising the pin 231, being surrounded by the deformation element 215 which is elastically deformed when the platform 3 is loaded, wherein the deformation element 215 is located in the mounting hole 223 of the bridge side plate 69.

As can be further seen in particular in Fig. 15, the foldable ramp 1 comprises a mounting 243 between the platform 3 and the bridge 51 allowing the platform 3 to move relative to the bridge 51 when the platform is loaded and a measuring arrangement 217 with a sensor 219 for indirectly measuring the load by measuring the movement of the platform 3 (third aspect of the invention). In the present example, the mounting 243 comprises for this purpose the deformation element 215 surrounding the pin 231, wherein the pin is connected to the bridge 51 via the slide 83 so that the compression of the deformation element 215 allows the platform to move along the compression distance 233 thereby realizing a relative movement to the bridge side plate 69 and thereby also to the bridge 51. This movement is measured by the sensor 219 as described above with respect to the first and second aspect of the invention.

Fig 16 shows a deformation-force diagram with deformation-force graphs for different deformation elements. Fig. 17 shows a table showing individual values from the deformation-force diagram of Fig. 16 for the different deformation elements.

The deformation-force graph of the deformation element 215 (first example) used in the previously described embodiments (having an outer diameter of 32 mm and being is encased between two plates 221) is designated with reference sign 245, the induvial values of which are shown in the second column of Fig. 17. The deformation-force graph of a second example of a deformation element with an outer diameter of 44 mm and being is encased between two plates is designated with reference sign 247, the induvial values of which are shown in the third column of Fig. 17. The deformation-force graph of a third example of a deformation element as used in the first example but being not encased between two plates is designated with reference sign 249, the induvial values of which are shown in the fourth column of Fig. 17. The deformation-force graph of a fourth example of a deformation element as used in the second example but being not encased between two plates is designated with reference sign 251, the induvial values of which are shown in the fifth column of Fig. 17.

As can be seen by the comparison of deformation-force graph 245 (deformation element with a diameter of 32 mm being encased by side plates) and 249 (deformation element with a diameter of 32 mm being not encased by side plates), the implementation of side plates leads to a more linear course of the deformation-force graph which makes the measurement of load easier and more precise. The same can be seen by comparing deformation graph 247 (deformation element with a diameter of 44 mm being encased by side plates) and 241 (deformation element with a diameter of 44 mm being not encased by side plates). Further, as can be seen by comparing deformation-force graph 245 (deformation element with a diameter of 32 mm being encased by side plates) and deformation graph 247 (deformation element with a diameter of 44 mm being encased by side plates), the deformation element with a diameter of 32 mm has a more linear course than the deformation element with a diameter of 44 mm. The same can be seen by comparing deformation-force graph 249 (deformation element with a diameter of 32 mm being not encased by side plates) and deformation graph 241 (deformation element with a diameter of 44 mm being not encased by side plates). Therefore the implementation of a deformation element with a diameter of 32 mm as such, as well as the use of side plates encasing the deformation element as such have been found to be advantages, wherein the combination is particularly advantages. The tests have been made with deformation elements made from Polyurethan in a foldable ramp 1 as shown in Fig. 1 and 2 with the platform in entry position and with a load measurement arrangement 217 as shown in Fig. 14, wherein the loads indicated in table Fig. 17 have been applied on the middle (in width direction W and length direction L) of the platform 3.

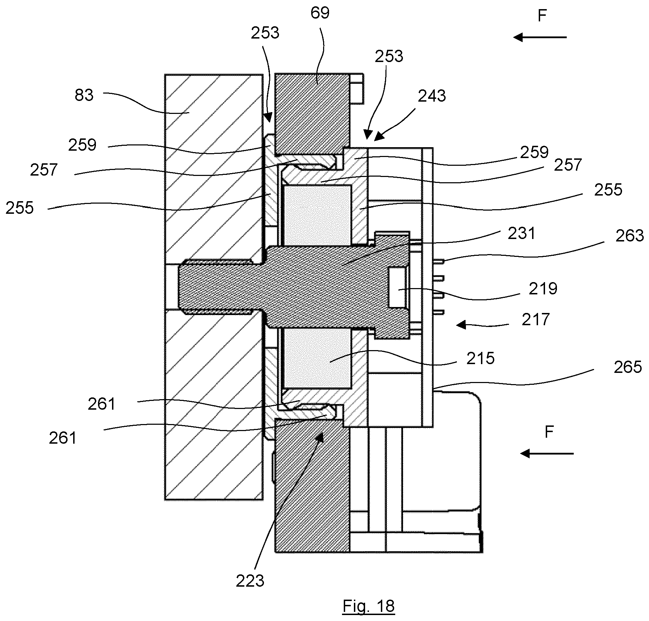

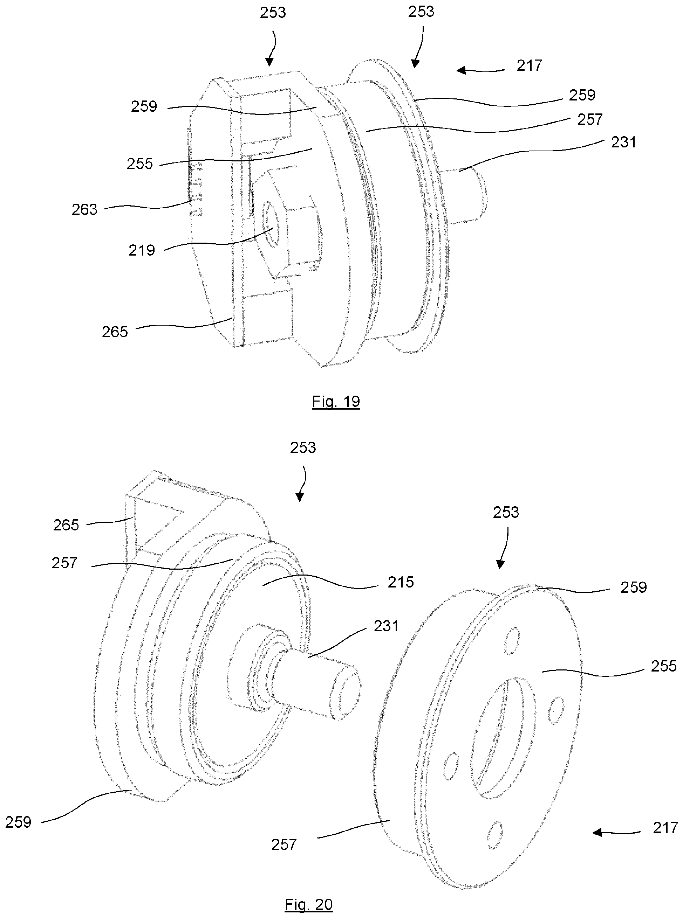

Fig. 18 shows a side view on an alternative embodiment of a measurement arrangement 217, in particular a load measuring arrangement 217, for detecting, in particular measuring, at least one status selected form a load of the platform 3 and/or an uneven ground the passenger car is standing on. The measurement arrangement 217 functions substantially as the load measurement arrangement 217 shown in Fig. 14. To avoid repetition, the following description will focus on the differences to the load measurement arrangement of Fig. 14. As can be seen, the measurement arrangement 215 does not comprise a roller bearing between the deformation element 215 and the pin 231 so that the deformation element 215 and the pin 231 are in contact with each other. Compared to Figure 14, the side plates 221 have been exchanged by bushings 253. Each bushing comprises a plate section 255, a coat section 257, and a shoulder 259. The coat sections 257 further comprise protrusions 261 at their distal ends providing a snap fitting between both bushings 253 thereby providing a form and/or force fitting between the deformation element 215 and the mounting hole 223 of the bridge side plate 69. This allows fixing the deformation element 215 and the bushings 253 in the desired position without the aid of screws, as in the embodiment of Fig. 14. Further, the implementation of Fig. 18 allows for pre-assembly of the measuring arrangement, in particular comprising a sensor, in particular a hall sensor 219, and a printed circuit board (PCT) 263 and to mount such pre-assembly into the mounting hole 223 and/or the bridge side plate 69. Figure 19 shows a perspective view on such pre-assembly while Fig. 20 shows an exploded view on the other side of the pre-assembly. This design further ensures correct positioning in a deformation direction of the deformation element. The hall sensor 219 is preferably located on or in the pin 231, in particular at a side of the pin 231 facing away from the slide 83. Further, in Fig. 18, one of the bushings comprises a cover plate 265 which may serve to protect the hall sensor 263, e.g. from dirt. The printed circuit board 263 is connected to a cover plate 265 of one of the bushings 253.

The features disclosed in the above description, the figures and the claims may be significant for the realization of the invention in its different embodiments individually as in any combination.

### List of Reference Signs:

- 1: Foldable ramp
- 3: Platform
- 5: Platform floor
- 7: Platform side wall
- 19: Slot
- 25: Slot
- 33: Rail
- 35: Top of platform side wall
- 37: Light source / LED strip
- 39: Light source / LED strip
- 49: Floor of passenger car
- 51: Bridge
- 53: Pivot mechanism
- 55: First locking mechanism
- 57: Electric actuator
- 59: Plate
- 61: Wire
- 63: Locking means
- 65: Cover
- 69: Bridge side plate
- 73: Extrusion profile
- 75: Corrugated surface
- 77: Bridge rear plate
- 79: Reinforcing part / steel inlay
- 81: Actuator
- 83: Slide
- 85: Slide channel
- 87: Curved groove
- 89: Pin of pin-groove arrangement
- 91: Mounting hole
- 93: Wire
- 95: Emergency lever
- 97: Elongated hole
- 99: Elongated hole
- 101: Rotational bearing
- 103: Rotation axis
- 105: Rotation shaft channel
- 111: Bushing
- 113: Pin
- 115: Rotational bearing
- 117: Hollow cylindrical section
- 121: Slide guiding section
- 123: Slide section
- 143: Ground
- 191: Second locking mechanism
- 193: Locking means
- 195: Latch
- 197: Latch lock
- 199: torsion springs
- 201: Torsion springs
- 203: Stopper
- 205: Mouth
- 207: Protrusion
- 215: Deformation element
- 217: Load measurment arrangement
- 219: Sensor
- 221: Side plate
- 223: Mounting hole
- 225: Screws
- 227: Screw holes
- 229: Screw
- 231: Pin
- 233: Compression distance
- 235: Distance when platform is loaded
- 237: Distance when platform is not loaded.
- 239: Screw head / movable measuring point
- 241: Probe / fix measuring point
- 243: Mounting
- 245: Deformation-force graph of a first example
- 247: Deformation-force graph of a second example
- 249: Deformation-force graph of a third example
- 251: Deformation-force graph of a fourth example253 bushing
- 255: plate section
- 257: coat section
- 259: shoulder
- 261: protrusion
- 263: printed circuit board
- 265: cover plate
- L: Longitudinal Direction
- H: Height Direction
- W: Width Direction
- T: Thickness Direction
- V: Vertical direction
- α: angle between platform and ground in entry position

## Claims

1. A foldable ramp (1) for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
**characterised by**
- a measuring arrangement (217), in particular a load measurement arrangement (217), comprising a deformation element (215) which is elastically deformed in at least one status selected form a load of the platform (3) and/or an uneven ground the passenger car is standing on, in particular which is elastically deformed when the platform (3) is loaded, and a sensor (219) for indirectly measuring the at least one status, in particular the load, by detecting, in particular measuring, the deformation of the deformation element (215).

2. The foldable ramp (1) according to claim 1, wherein the deformation element (215) is part of a mounting (243) for transferring weight forces from the platform (3) to a bridge (51) of the foldable ramp (1) in the at least one status, in particular when the platform (51) is loaded, in particular wherein the deformation element (215) is located in a mounting hole (223), in particular in a mounting hole of the bridge (51), more in particular in a mounting hole (223) of a side plate (69) of a bridge (51).

3. The foldable ramp (1) according to claim 2, wherein the deformation element (215) surrounds a pin (231), in particular wherein the pin is in contact with the deformation element and/or wherein a region between the deformation element and the pin is free of a bearing, in particular free of a roller bearing, or wherein the deformation element surrounds a rotational bearing (101) surrounding a pin (215), more in particular a roller bearing (101) surrounding a pin (231), preferably wherein the pin (231) is part of a pivot mechanism (53) for pivoting the platform (3) between the transport position and the passive position, in particular wherein the pin (231) is part of guiding means of the pivot mechanism (53), in particular of a slide-rail arrangement of the pivot mechanism (53).

4. The foldable ramp (1) according to claim 2 or 3, wherein the deformation element (215) is encased, in particular by bushings or side plates (221) on both sides of the mounting (223) hole, to reduce, in particular avoid, evasive deformation of the deformation (215) element in the at least one status, in particular when the platform (3) is loaded, more in particular to force the deformation element (215) into a substantially pure elastic compression in the at least one status, in particular when the platform (3) is loaded.

5. The foldable ramp (1) according to one of the claims 3 to 4, wherein, in the at least one status, in particular when the platform (3) is loaded, the pin (231) transfers weight forces from the platform (3) to the deformable element (215), thereby elastically compressing the deformation element (215) and moving over a compression distance (233), e.g. in gravitational direction (G), in particular wherein the sensor (219), in the at least one status, in particular when the platform (3) is loaded, detects, in particular measures, the deformation of the deformation element (215) indirectly by measuring a change in distance between the pin (231) and a probe (241).

6. The foldable ramp (1) according to any of the preceding claims, wherein the sensor (219) is a hall sensor, a capacity sensor or an induction sensor, and/or wherein the deformation element (215) comprises or consists of an elastic material, preferably of an elastomer, more preferably of rubber or polyurethan, most preferably of polyurethan, and/or wherein the deformation element (215) has a hollow-cylindrical shape with an outer diameter of 10 mm to 100 mm, preferably 15 mm to 80 mm, more preferably 20 mm to 60 mm, most preferably 25 mm to 40 mm.

7. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
**characterised by**
- a measuring arrangement (217), in particular a load measurement arrangement (217), comprising two measuring points changing their distance to each other in at least one status selected form a load of the platform (3) and/or an uneven ground the passenger car is standing on, in particular changing their distance to each other when the platform is loaded, and a sensor (219) for indirectly measuring the least one status, in particular the load, by detecting, in particular measuring, the change in distance.

8. The foldable ramp (1) according to claim 7, wherein the change in distance is caused in that one of the measuring points is a fix measuring point remaining substantially in the same position in the at least one status, in particular when the platform (3) is loaded, while the other measuring point is a movable measuring point moving towards or away from the fixed measuring point, in the at least one status, in particular when the platform (3) is loaded, in particular wherein the fix measuring point is fixedly connected to a bridge (51), in particular to a side plate (69) of a bridge (51), of the foldable ramp (1) and/or wherein the movable measuring point is located or comprised in a pin (231), in particular a pin (231) being surrounded by a deformation element (215) which is elastically deformed in the at least one status, in particular when the platform (3) is loaded, in particular wherein the deformation element (215) is located in a mounting hole (223) of the bridge (51), in particular of a side plate (69) of a bridge (51), of the foldable ramp (1).

9. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position, and
- a bridge (51) for rotatably connecting the platform (3) with the vehicle,
**characterised by**
- a mounting (243) between the platform (3) and the bridge (51) allowing the platform (3) to move relative to the bridge (51) when the platform (3) is loaded and
a measuring arrangement (217), in particular a load measuring arrangement (217), with a sensor (219) for indirectly measuring at least one status selected form a load of the platform (3) and/or an uneven ground the passenger car is standing on, in particular the load, by measuring the movement of the platform (3), preferably wherein the sensor (219) is designed to measure the movement of the platform (3) by measuring a change in distance between a measuring point following the movement of the platform (3) and a measuring point being fixedly connected to the bridge (51).

10. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
**characterised by**
- a measuring arrangement (217) for detecting, in particular measuring, at least one status selected form a load of the platform (3) and/or an uneven ground the passenger car is standing on, based in part on temperature information.

11. The foldable ramp according to claim 10, wherein the measuring arrangement comprises at least one measurement element providing an indication for the at least one status, wherein the indication depends on the at least one status and a temperature of the measurement element, in particular wherein the at least one measurement element is a deformation element, in particular comprising or consisting of elastic material, preferably of an elastomer, more preferably of rubber or polyurethan, most preferably of polyurethan, wherein the indication comprises an elastic deformation resulting from the at least one status, in particular wherein the elastic deformation depends on the temperature of the deformation element.

12. The measuring arrangement according to one of the claims 10 or 11, wherein the measurement arrangement comprises at least one processor and at least one memory storing instruction that, when executed by the at least one processor, causes to calculate the at least one status based on the indication and the temperature information, and/or wherein the measuring arrangement comprises an interface for receiving the temperature information and/or a sensor for measuring the temperature information.

13. A foldable ramp (1), in particular according to any of the preceding claims, for wheelchair access to a passenger car rear door, comprising:
- a platform (3) which can be arranged in several positions including an entry position wherein the platform (3) is folded out of the car to allow wheelchair access to the car, a transport position wherein the platform (3) is arranged in the car in an upright position and a passive position wherein the platform (3) is arranged in the car in a lying position,
**characterised by**
- a measuring arrangement (217) for detecting, in particular measuring, an uneven ground the passenger car is standing on, and preferably by an alert device, in particular a light or sound source, for emitting an alert signal when the measuring arrangement detects an uneven ground the passenger car is standing on.

14. The foldable ramp according to claim 13, wherein the measuring arrangement (217) comprises a first measurement element providing a first indication and a second measurement element providing a second indication, in particular wherein the measurement arrangement comprises at least one processor and at least one memory storing instructions that, when executed by the at least one processor, causes to detect an uneven ground when a diffrence between the first indication and the second indication is detected, in particular exceeds a threshold value, and/or when the first and/or second indication indicates a deflection of the platform, in particular wherein the first measurement element and the second measurement element are deformation elements, in particular deforming differently when the passenger car stands on an uneven ground, in particular wherein the first indication indicates a deformation of the first deformation element and the second indication indicates a deformation of the second deformation element.

15. The foldable ramp according to claim 14, wherein the first deformation element and the second deformation element are elastically deformed when the platform (3) is loaded and/or when the passenger car stands on an uneven ground, and wherein the measuring arrangement comprises a first sensor for detecting, in particular measuring, the deformation of the first deformation element and a second sensor for detecting, in particular measuring, the deformation of the second deformation element.
